# EUROPEAN PATENT APPLICATION

(11) **EP 4 460 099 A1**
(43) Date of publication of application: **06.11.2024**
(21) Application number: 22915506.4
(22) Date of filing: 27.10.2022
(51) Int. Cl.: H04W 48/16, H04W 72/0457, H04W 76/15, H04W 76/20, H04W 92/16, H04W 92/20

(54) **WIRELESS ACCESS NETWORK NODE, USER EQUIPMENT, AND METHODS FOR SAME**

(30) Priority: 28.12.2021 JP 2021215151
(71) Applicant: NEC Corporation, 108-8001 Tokyo (JP)
(72) Inventor: FUTAKI Hisashi, Tokyo 108-8001 (JP); HAYASHI Sadafuku, Tokyo 108-8001 (JP)
(74) Representative: MacDougall, Alan John Shaw
(86) International application number: PCT/JP2022/040271
(87) International publication number: WO 2023/127273

(57) **Abstract**

A Secondary Node (SN) (2) transmits to a UE (3), via a Master Node (MN) or via a direct signaling radio bearer between the SN (2) and the UE (3), an SN RRC message containing configurations of a plurality of candidate PSCells for a first conditional PSCell change. The SN RRC message indicates that a mode of operation is applied, requested, recommended, or available in which a configuration of at least one candidate PSCell not selected in the first conditional PSCell change is to be reused by the UE (3) for a subsequent second conditional PSCell change. This can help, for example, to implement a feature or mode of operation that enables a subsequent second conditional mobility without reconfiguration or reinitialization by the network after a first conditional mobility.

## Description

### Technical Field

The present disclosure relates to radio communication systems, and in particular to conditional mobility of a radio terminal.

### Background Art

The 3rd Generation Partnership Project (3GPP (registered trademark)) Release 16 supports Conditional Handover (CHO) and Conditional Primary Secondary Cell Group (SCG) Cell (PSCell) Change (CPC) (see, for example, Non-Patent Literature 1 and 2). CPC in 3GPP Release 16 is intra-SN CPC without Master Node (MN) involvement and supports conditional PSCell change within a single SN from a source PSCell to any of one or more candidate cells (i.e., candidate PSCells). This CPC is also referred to SN-initiated Conditional SN Modification without MN involvement.

The 3GPP Radio Access Network (RAN) Working Group is currently considering enhancements to conditional mobility to be introduced in 3GPP Release 17 (see, for example, Non-Patent Literature 3). The new conditional mobility to be introduced in 3GPP Release 17 includes Conditional PSCell Addition (CPA) and inter-SN CPC. CPA is also referred to as conditional SN addition, and inter-SN CPC is also referred to as conditional SN change. Inter-SN CPC or conditional SN change is initiated by the MN or the source SN.

In addition, further mobility enhancements are being discussed for 3GPP Release 18, including "Multi-Radio Dual Connectivity (MR-DC) with selective activation of cell groups" (see, for example, Non-Patent Literature 4 and 5). In Release 17 CPA and CPC, the UE is required to release any unused (unselected) CPC/CPA configuration in response to selecting one of the candidate target PSCells and performing random access to the selected target PSCell. Thus, the UE has no way to perform subsequent CPCs without being reconfigured and reinitialized by the network. "Multi-Radio Dual Connectivity (MR-DC) with selective activation of cell groups" aims to address this problem. Specifically, according to Non-Patent Literature 5, MR-DC with selective activation of cell groups is intended to enable subsequent CPC/CPA without reconfiguration and reinitialization of the CPC/CPA preparation by the network after the SCG is changed, thereby reducing CPC/CPA signaling overhead and interruption time.

### Citation List

### Non Patent Literature

[Non-Patent Literature 1] 3GPP TS 38.300 V16.7.0 (2021-09), "3rd Generation Partnership Project; Technical Specification Group Radio Access Network; NR; NR and NG-RAN Overall Description; Stage 2, (Release 16)", September 2021
[Non-Patent Literature 2]3GPP TS 37.340 V16.7.0 (2021-09), "3rd Generation Partnership Project; Technical Specification Group Radio Access Network; Evolved Universal Terrestrial Radio Access (E-UTRA) and NR; Multi-connectivity; Stage 2 (Release 16)", September 2021
[Non-Patent Literature 3] CATT, "Introduction of CPA and inter-SN CPC", R2-2111640, 3GPP TSG-RAN WG2 Meeting #116-e, November 1-12, 2021
[Non-Patent Literature 4] MediaTek, "Moderator's summary of discussion for [94e-14-R18-MobEnh]", RP-213541, 3GPP TSG RAN Meeting #94e, December 6-17, 2021
[Non-Patent Literature 5] MediaTek, "New WID on Further NR mobility enhancements", RP-213565, 3GPP TSG RAN Meeting #94e, December 6-17, 2021

### Summary of Invention

### Technical Problem

The inventors have studied mechanisms and procedures for implementing a feature or mode of operation referred to as "MR-DC with selective activation of cell groups" and have identified various problems.

One of these problems relates to the clarification of various procedures for a feature or mode of operation referred to as "MR-DC with selective activation of cell groups". For example, when this feature or mode of operation is applied to an intra-SN CPC, the procedure for using the feature is currently unclear. In addition, when a Radio Access Network (RAN) node (e.g., gNB) includes a Central Unit (CU) and one or more Distributed Units (DUs), the signaling required between the CU and the one or more DUs to support this feature or mode of operation is unclear.

Another one of these problems relates to Layer 1/Layer 2 (L1/L2) based inter-cell mobility. Non-Patent Literature 5 states that one of the objectives for 3GPP Release 18 is to clarify (or specify) the mechanisms and procedures for MR-DC with selective activation of cell groups, via Layer 3 (L3) enhancements. However, certain scenarios, such as selective activation of cell groups within a single RAN node (e.g., MN or SN), may be feasible using Layer 1/Layer 2 (L1/L2) based inter-cell mobility instead of L3 based inter-cell mobility.

One of the objects to be achieved by the example embodiments disclosed herein is to provide apparatuses, methods, and programs that contribute to solving at least one of a plurality of problems, including the problems described above, related to implementing a feature or mode of operation that enables a subsequent second conditional mobility without reconfiguration or reinitialization from the network after a first conditional mobility. It should be noted that this object is merely one of the objects to be achieved by the example embodiments disclosed herein. Other objects or problems and novel features will become apparent from the following description and the accompanying drawings.

### Solution to Problem

A first aspect is directed to a RAN node configured to operate as an SN associated with a Secondary Cell Group (SCG) in dual connectivity for a UE. The RAN node includes at least one memory and at least one processor coupled to the at least one memory. The at least one processor is configured to transmit to the UE, via an MN or via a direct signaling radio bearer between the SN and the UE, a first SN Radio Resource Control (RRC) message containing configurations of a plurality of candidate PSCells for a first conditional PSCell change. The first SN RRC message indicates that a mode of operation is applied, requested, recommended, or available in which a configuration of at least one candidate PSCell not selected in the first conditional PSCell change is to be reused by the UE for a subsequent second conditional PSCell change.

A second aspect is directed to a method performed by a RAN node configured to operate as an SN associated with an SCG in dual connectivity for a UE. The method includes transmitting to the UE, via an MN or via a direct signaling radio bearer between the SN and the UE, a first SN RRC message containing configurations of a plurality of candidate PSCells for a first conditional PSCell change. The first SN RRC message indicates that a mode of operation is applied, requested, recommended, or available in which a configuration of at least one candidate PSCell not selected in the first conditional PSCell change is to be reused by the UE for a subsequent second conditional PSCell change.

A third aspect is directed to a UE. The UE includes at least one memory and at least one processor coupled to the at least one memory. The at least one processor is configured to receive, via an MN or via a direct signaling radio bearer between the UE and an SN, a first SN RRC message containing configurations of a plurality of candidate PSCells for a first conditional PSCell change. The at least one processor is configured to, if an execution condition is satisfied for one of the plurality of candidate PSCells, apply a configuration corresponding to the one candidate PSCell for which the execution condition has been satisfied. Further, the at least one processor is configured to, if the first SN RRC indicates that a mode of operation is applied, requested, recommended, or available in which a configuration of at least one candidate PSCell not selected in the first conditional PSCell change is to be reused by the UE for a subsequent second conditional PSCell change, maintain the configuration of the at least one candidate PSCell for use in the second conditional PSCell change.

A fourth aspect is directed to a method performed by a UE. The method includes the steps of:
(a) receiving, via an MN or via a direct signaling radio bearer between the UE and an SN, a first SN RRC message containing configurations of a plurality of candidate PSCells for a first conditional PSCell change;
(b) if an execution condition is satisfied for one of the plurality of candidate PSCells, applying a configuration corresponding to the one candidate PSCell for which the execution condition has been satisfied; and
(c) if the first SN RRC indicates that a mode of operation is applied, requested, recommended, or available in which a configuration of at least one candidate PSCell not selected in the first conditional PSCell change is to be reused by the UE for a subsequent second conditional PSCell change, maintaining the configuration of the at least one candidate PSCell for use in the second conditional PSCell change.

A fifth aspect is directed to a Central Unit (CU) of a RAN node. The CU includes at least one memory and at least one processor coupled to the at least one memory. The at least one processor is configured to send a first message to a Distributed Unit (DU) and receive a second message from the DU in response to the first message. The first message indicates a request for a first conditional mobility for a UE. Further, the first message indicates that a mode of operation is applied, requested, recommended, or available in which a configuration of at least one candidate target cell not selected in the first conditional mobility is to be reused by the UE for a subsequent second conditional mobility.

A sixth aspect is directed to a method performed by a CU of a RAN node. The method includes sending a first message to a DU and receiving a second message from the DU in response to the first message. The first message indicates a request for a first conditional mobility for a UE. Further, the first message indicates that a mode of operation is applied, requested, recommended, or available in which a configuration of at least one candidate target cell not selected in the first conditional mobility is to be reused by the UE for a subsequent second conditional mobility.

A seventh aspect is directed to a DU of a RAN node. The DU includes at least one memory and at least one processor coupled to the at least one memory. The at least one processor is configured to receive a first message from a CU and send a second message to the CU in response to the first message. The first message indicates a request for a first conditional mobility for a UE. Further, the first message indicates that a mode of operation is applied, requested, recommended, or available in which a configuration of at least one candidate target cell not selected in the first conditional mobility is to be reused by the UE for a subsequent second conditional mobility.

An eighth aspect is directed to a method performed by a DU of a RAN node. The method includes receiving a first message from a CU and sending a second message to the CU in response to the first message. The first message indicates a request for a first conditional mobility for a UE. Further, the first message indicates that a mode of operation is applied, requested, recommended, or available in which a configuration of at least one candidate target cell not selected in the first conditional mobility is to be reused by the UE for a subsequent second conditional mobility.

A ninth aspect is directed to a CU of a RAN node. The CU includes at least one memory and at least one processor coupled to the at least one memory. The at least one processor is configured to receive a first message from a first DU indicating a candidate target cell that a UE has successfully accessed during a first conditional mobility. The first message indicates that a preparation of another candidate target cell accepted for the first conditional mobility is to be maintained for a subsequent second conditional mobility.

A tenth aspect is directed to a method performed by a CU of a RAN node. The method includes receiving a first message from a first DU indicating a candidate target cell that a UE has successfully accessed during a first conditional mobility. The first message indicates that a preparation of another candidate target cell accepted for the first conditional mobility is to be maintained for a subsequent second conditional mobility.

An eleventh aspect is directed to a DU of a RAN node. The DU includes at least one memory and at least one processor coupled to the at least one memory. The at least one processor is configured to send a first message to a CU indicating a candidate target cell that a UE has successfully accessed during a first conditional mobility. The first message indicates that a preparation of another candidate target cell accepted for the first conditional mobility is to be maintained for a subsequent second conditional mobility.

A twelfth aspect is directed to a method performed by a DU of a RAN node. The method includes sending a first message to a CU indicating a candidate target cell that a UE has successfully accessed during a first conditional mobility. The first message indicates that a preparation of another candidate target cell accepted for the first conditional mobility is to be maintained for a subsequent second conditional mobility.

A thirteenth aspect is directed to a CU of a RAN node. The CU includes at least one memory and at least one processor coupled to the at least one memory. The at least one processor is configured to receive a first message from a DU indicating a candidate target cell that a UE has successfully accessed during a first conditional mobility. Further, the at least one processor is configured to send to a second DU, after receipt of the first message, a second message indicating that preparations of one or more candidate target cells for the first conditional mobility are to be maintained for a subsequent second conditional mobility.

A fourteenth aspect is directed to a method performed by a CU of a RAN node. The method includes the steps of:
(a) receiving a first message from a DU indicating a candidate target cell that a UE has successfully accessed during a first conditional mobility; and
(b) sending to a second DU, after receipt of the first message, a second message indicating that preparations of one or more candidate target cells for the first conditional mobility are to be maintained for a subsequent second conditional mobility.

A fifteenth aspect is directed to a CU of a RAN node. The CU includes at least one memory and at least one processor coupled to the at least one memory. The at least one processor is configured to receive a first message from a DU indicating a candidate target cell that a UE has successfully accessed during a first conditional mobility. Further, the at least one processor is configured to send to a source DU serving a source cell of the first conditional mobility, after receipt of the first message, a second message indicating that a configuration of the source cell is to be maintained for a subsequent second conditional mobility.

A sixteenth aspect is directed to a method performed by a CU of a RAN node. The method includes the steps of:
(a) receiving a first message from a DU indicating a candidate target cell that a UE has successfully accessed during a first conditional mobility; and
(b) sending to a source DU serving a source cell of the first conditional mobility, after receipt of the first message, a second message indicating that a configuration of the source cell is to be maintained for a subsequent second conditional mobility.

A seventeenth aspect is directed to a UE. The UE includes at least one memory and at least one processor coupled to the at least one memory. The at least one processor is configured to receive, from a RAN node, configurations of a plurality of candidate CG sets in which candidate SpCells are different from each other. Further, the at least one processor is configured to select one candidate SpCell by Layer 1/Layer 2 based inter-cell mobility and apply a configuration of a candidate CG set corresponding to the selected candidate SpCell.

An eighteenth aspect is directed to a method performed by a UE. The method includes the steps of:
(a) receiving, from a RAN node, configurations of a plurality of candidate CG sets in which candidate SpCells are different from each other; and
(b) selecting one candidate SpCell by Layer 1/Layer 2 based inter-cell mobility and applying a configuration of a candidate CG set corresponding to the selected candidate SpCell.

A nineteenth aspect is directed to a program. The program includes a set of instructions (software codes) that, when loaded into a computer, cause the computer to perform the method according to any of the aspects described above.

### Advantageous Effects of Invention

According to the above-described aspects, it is possible to provide apparatuses, methods, and programs that contribute to solving at least one of a plurality of problems related to implementing a feature or mode of operation that allows a subsequent second conditional mobility without reconfiguration or reinitialization from the network after a first conditional mobility.

### Brief Description of Drawings

Fig. 1 shows an example configuration of a radio communication system according to an example embodiment;
Fig. 2 shows an example configuration of a RAN node according to an example embodiment;
Fig. 3 is a flowchart showing an example of the operation of a RAN node (i.e., SN) according to an example embodiment;
Fig. 4 is a flowchart showing an example of the operation of a UE according to an example embodiment;
Fig. 5A is a sequence diagram showing an example of signaling regarding intra-SN CPC (or conditional SN modification) according to an example embodiment;
Fig. 5B is a sequence diagram showing an example of signaling regarding intra-SN CPC (or conditional SN modification) according to an example embodiment;
Fig. 6A is a sequence diagram showing an example of signaling regarding intra-SN CPC (or conditional SN modification) according to an example embodiment;
Fig. 6B is a sequence diagram showing an example of signaling regarding intra-SN CPC (or conditional SN modification) according to an example embodiment;
Fig. 7 is a sequence diagram showing an example of signaling between a CU and a DU according to an example embodiment;
Fig. 8 is a diagram showing an example of the format of a UE CONTEXT MODIFICATION REQUEST message according to an example embodiment;
Fig. 9 is a diagram showing an example of the format of a UE CONTEXT MODIFICATION RESPONSE message according to an example embodiment;
Fig. 10 is a diagram showing an example of the format of a UE CONTEXT SETUP REQUEST message according to an example embodiment;
Fig. 11 is a diagram showing an example of the format of a UE CONTEXT SETUP RESPONSE message according to an example embodiment;
Fig. 12 is a sequence diagram showing an example of signaling between a CU and a DU according to an example embodiment;
Fig. 13 is a sequence diagram showing an example of signaling between a CU and a DU according to an example embodiment;
Fig. 14 is a sequence diagram showing an example of signaling between a CU and a DU according to an example embodiment;
Fig. 15 is a flowchart showing an example of the operation of a UE according to an example embodiment;
Fig. 16 is a sequence diagram showing an example of signaling regarding L1/L2 based inter-cell mobility according to an example embodiment;
Fig. 17 is a block diagram showing an example configuration of a RAN node according to an example embodiment; and
Fig. 18 is a block diagram showing an example configuration of a UE according to an example embodiment.

### Example Embodiment

Specific example embodiments will be described hereinafter in detail with reference to the drawings. The same or corresponding elements are denoted by the same symbols throughout the drawings, and duplicated explanations are omitted as necessary for the sake of clarity.

Each of the example embodiments described below may be used individually, or two or more of the example embodiments may be appropriately combined with one another. These example embodiments include novel features different from each other. Accordingly, these example embodiments contribute to attaining objects or solving problems different from one another and contribute to obtaining advantages different from one another.

The example embodiments presented below are primarily described for the 3GPP Long Term Evolution (LTE) system and the 5th generation mobile communication system (5G system). However, these example embodiments can be applied to other radio communication systems that support technologies similar to 3GPP multi-connectivity (e.g., Dual Connectivity). The term LTE as used in this specification includes enhancements and developments of LTE and LTE-Advanced to enable interworking with the 5G system, unless otherwise noted.

As used in this specification, "if" can be interpreted to mean "when", "at or around the time", "after", "upon", "in response to determining", "in accordance with a determination", or "in response to detecting", depending on the context.

First, the configuration and operation of a plurality of network elements common to a plurality of example embodiments are described.

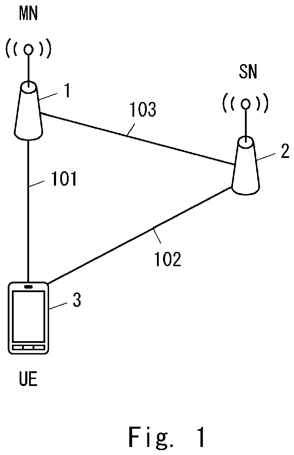

Fig. 1 shows an example configuration of a radio communication system according to a plurality of example embodiments. In the example of Fig. 1, the radio communication system includes a RAN node 1, a RAN node 2, and a UE 3. Each element (or network function) shown in Fig. 1 can be implemented, for example, as a network element on dedicated hardware, as a software instance running on dedicated hardware, or as a virtualized function instantiated on an application platform.

The RAN node 1 may be a Central Unit (e.g., eNB-CU or gNB-CU) in a Cloud RAN (C-RAN) deployment, or a combination of a CU and one or more Distributed Units (e.g., eNB-DUs or gNB-DUs). The C-RAN is also referred to as a CU/DU split. The CU may include a Control Plane (CP) Unit (e.g., gNB-CU-CP) and one or more User Plane (UP) Units (e.g., gNB-CU-UPs). Accordingly, the RAN node 1 may be a CU-CP or a combination of a CU-CP and a CU-UP(s). Similarly, the RAN node 2 may be a CU or a combination of a CU and one or more DUs. The RAN node 2 may be a CU-CP or a combination of a CU-CP and a CU-UP(s).

Each of the RAN nodes 1 and 2 may be an Evolved Universal Mobile Telecommunications System (UMTS) Terrestrial Radio Access Network (EUTRAN) node or a Next Generation Radio Access Network (NG-RAN) node. The EUTRAN node may be an eNB or an en-gNB. The NG-RAN node may be a gNB or an ng-eNB. The en-gNB is a node that provides NR user plane and control plane protocol terminations towards a UE and acts as a Secondary Node (SN) in E-UTRA-NR Dual Connectivity (EN-DC). The ng-eNB is a node that provides E-UTRA user plane and control plane protocol terminations towards a UE and is connected to a 5GC via an NG interface. The Radio Access Technology (RAT) of the RAN node 1 may be different from that of the RAN node 2.

The RAN node 1 and the RAN node 2 communicate with each other through an inter-node interface (i.e., X2 interface or Xn interface) 103. The RAN node 1 and the RAN node 2 operate as a Master Node (MN) and a Secondary Node (SN), respectively, in dual connectivity. Accordingly, in the following, the RAN node 1 may be referred to as MN 1 and the RAN node 2 may be referred to as candidate SN 2.

This dual connectivity may be Multi-Radio Dual Connectivity (MR-DC). The MR-DC includes E-UTRA-NR Dual Connectivity (EN-DC), NG-RAN E-UTRA-NR Dual Connectivity (NGEN-DC), NR-E-UTRA Dual Connectivity (NE-DC), and NR-NR Dual Connectivity (NR-DC). Accordingly, the MN 1 may be one of a Master eNB (in EN-DC), a Master ng-eNB (in NGEN-DC), and a Master gNB (in NR-DC and NE-DC). Similarly, the SN 2 may be one of an en-gNB (in EN-DC), a Secondary ng-eNB (in NE-DC), and a Secondary gNB (in NR-DC and NGEN-DC). In EN-DC, the UE 3 is connected to an eNB acting as the MN 1 and to an en-gNB acting as the SN 2. In NGEN-DC, the UE 3 is connected to an ng-eNB acting as the MN 1 and to a gNB acting as the SN 2. In NE-DC, the UE 3 is connected to a gNB acting as the MN 1 and to an ng-eNB acting as the SN 2. In NR-DC, the UE 3 is connected to one gNB (or gNB-DU) acting as the MN 1 and to another gNB (or gNB-DU) acting as the SN 2.

The MCG is a group of serving cells associated with (or provided by) the MN 1, including the SpCell (i.e., Primary Cell (PCell)) and optionally one or more Secondary Cells (SCells). Meanwhile, the SCG is a group of serving cells associated with (or provided by) the SN 2 and includes the Primary SCG Cell (PSCell) and optionally one or more Secondary Cells (SCells). The PSCell is the Special Cell (SpCell) of the SCG and supports Physical Uplink Control Channel (PUCCH) transmission and contention-based random access. In LTE (e.g., LTE-DC and NE-DC), PSCell may be an abbreviation of Primary SCell.

As used in the present specification, the term "primary SCG cell" and its abbreviation "PSCell" stands for a cell that is included in a cell group provided by an SN in dual connectivity, has an uplink component carrier, and is configured with uplink control channel (e.g., PUCCH) resources. Specifically, the term "primary SCG cell" and its abbreviation "PSCell" may refer to a Primary SCG Cell of a cell group provided by an SN (e.g., en-gNB in EN-DC, gNB in NGEN-DC, or gNB in NR-DC) supporting 5G NR, or may refer to a Primary SCell of a cell group provided by an SN (e.g., eNB in LTE DC, or ng-eNB in NE-DC) supporting E-UTRA.

The RAN nodes 1 and 2 and the UE 3 support Conditional PSCell Addition (CPA) to add an SCG provided by the RAN node 2 for the UE 3. CPA may be referred to as conditional SN addition. CPA (or conditional SN addition) is a PSCell addition procedure (or SN addition procedure) that is performed only when a CPA execution condition is met.

Although not shown in Fig. 1, a plurality of candidate cells (i.e., candidate PSCells) provided by a plurality of candidate SNs 2 may be prepared for a CPA. In the CPA procedure, the UE 3 receives, from the MN 1, configurations of one or more candidate PSCells prepared by one or more candidate SNs and one or more CPA execution conditions associated therewith. More specifically, the configuration of each candidate PSCell is an Information Element (IE) (e.g., condRRCReconfig) of an RRC message of the MN 1, and the configurations of one or more candidate PSCells and the associated CPA execution conditions are included in conditional mobility configuration information (e.g., conditionalReconfiguration IE) generated by the MN 1.

The configuration of each candidate PSCell is generated by the candidate SN (e.g., candidate SN 2) that provides (or has prepared) that candidate PSCell. The configuration of each candidate PSCell includes at least configuration information for the candidate PSCell. The configuration of each candidate PSCell may further include configuration information for one or more SCells that accompany (i.e., are configured together with or in association with) the candidate PSCell. The configuration of each candidate PSCell may be a radio bearer (RB) configuration, a CG configuration, an SCG configuration, or an SCG radio resource configuration, or any combination thereof. More specifically, the configuration of each candidate PSCell may be an SN RRC Reconfiguration message generated by the candidate SN (e.g., candidate SN 2) that provides (or has prepared) that candidate PSCell. Part or all of the configurations of one or more candidate PSCells are contained in a CPA configuration sent from the MN 1 to the UE 3. The CPA configuration is a list of one or more MN RRC Reconfiguration messages. Each MN RRC Reconfiguration message contains the configuration of a candidate PSCell (e.g., one or any combination of RB configuration, CG configuration, SCG configuration, SCG radio resource configuration, and SN RRC Reconfiguration message) received from the candidate SN.

On the other hand, CPA execution conditions are generated by the MN 1. A CPA execution condition may consist of one or more trigger conditions. A condition or criterion that triggers a CPA event may be similar to that for a measurement report event and may be, for example, CondEvent A3, CondEvent A4, or CondEvent A5. CondEvent A3 is "Conditional reconfiguration candidate becomes amount of offset better than PCell/PSCell". CondEvent A4 is "Conditional reconfiguration candidate becomes better than absolute threshold". CondEvent A5 is "PCell/PSCell becomes worse than absolute threshold 1 AND Conditional reconfiguration candidate becomes better than another absolute threshold2". The UE 3 evaluates the CPA execution conditions. If the execution condition(s) for one candidate PSCell is (or are) met, the UE 3 applies the PSCell configuration (e.g., one or any combination of RB configuration, CG configuration, SCG configuration, SCG radio resource configuration, and SN RRC Reconfiguration message) corresponding to the selected candidate PSCell (i.e., the candidate PSCell whose execution condition(s) is (or are) satisfied). If a bearer requiring SCG radio resources is configured, the UE 3 performs synchronization with the selected PSCell. If the execution conditions for two or more candidate PSCells are satisfied, the UE 3 may select one of these candidate PSCells and perform the operation described above.

In addition, the RAN node 2 and the UE 3 support intra-SN CPC. Intra-SN CPC may be referred to as SN-initiated Conditional SN Modification without MN involvement. Intra-SN CPC is an intra-SN PSCell change procedure that is performed only when a CPC execution condition is met.

In the intra-SN CPC procedure, the UE 3 receives from the SN 2, configurations of one or more candidate PSCells prepared by the SN 2 and one or more CPC execution conditions associated therewith. The configurations and associated CPC execution conditions for respective candidate PSCells are contained in a CPC configuration of the intra-SN CPC. The SN 2 may send these to the UE 3 via the MN 1 or to the UE 3 via a direct signaling radio bearer (i.e., Signalling Radio Bearer 3 (SRB3)) between the SN 2 and the UE 3. More specifically, the configuration of each candidate PSCell is an Information Element (IE) (e.g., condRRCReconfig) of an RRC message of the SN 2, and the configurations of one or more candidate PSCells and the associated CPC execution conditions are included in conditional mobility configuration information (e.g., conditionalReconfiguration IE) generated by the SN 2.

The configuration of each candidate PSCell includes at least configuration information for the candidate PSCell. The configuration of each candidate PSCell may further include configuration information for one or more SCells that accompany (i.e., are configured together with or in association with) the candidate PSCell. The configuration of each candidate PSCell may be a radio bearer (RB) configuration, a cell group (CG) configuration, an SCG configuration, or an SCG radio resource configuration, or any combination thereof. In particular, the configuration of each candidate PSCell may be an SN RRC Reconfiguration message generated by the SN 2.

A CPC execution condition for an Intra-SN CPC may consist of one or more trigger conditions. A condition or criterion that triggers a CPC event may be similar to that for a measurement report event and may be, for example, CondEvent A3, CondEvent A4, or CondEvent A5. The UE 3 evaluates the CPC execution conditions. If the execution condition(s) for one candidate PSCell is (or are) met, the UE 3 detaches from the source PSCell, applies the configuration corresponding to the selected candidate PSCell (i.e., the candidate PSCell whose execution condition(s) is (or are) satisfied), and synchronizes with the selected candidate PSCell. If the execution conditions for two or more candidate PSCells are satisfied, the UE 3 may select one of these candidate PSCells and perform the operation described above.

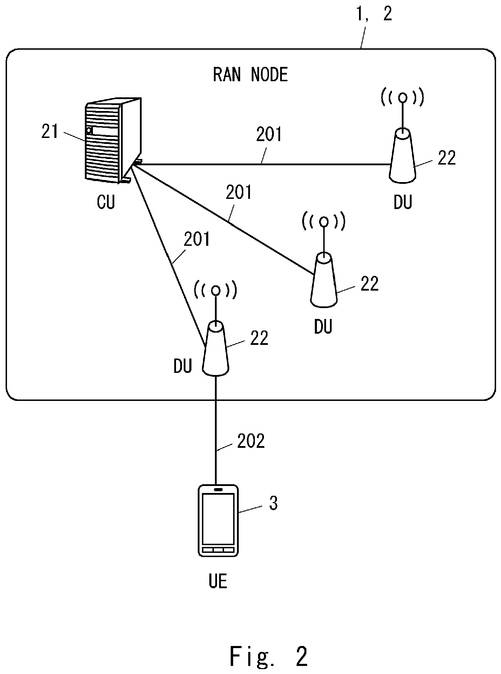

One or both of the RAN nodes 1 and 2 may have the configuration shown in Fig. 2. Each element (or network function) shown in Fig. 2 can be implemented, for example, as a network element on dedicated hardware, as a software instance running on dedicated hardware, or as a virtualized function instantiated on an application platform. One or both of the RAN nodes 1 and 2 may include, without limitation, a CU 21 and one or more DUs 22 as shown in Fig. 2. The CU 21 is connected to each DU 22 via an interface 201. The UE 3 is connected to at least one DU 22 via at least one air interface 202.

The CU 21 can be a logical node hosting the Radio Resource Control (RRC), Service Data Adaptation Protocol (SDAP), and Packet Data Convergence Protocol (PDCP) protocols of the gNB (or the RRC and PDCP protocols of the gNB). The DU 22 can be a logical node hosting the Radio Link Control (RLC), Medium Access Control (MAC), and Physical (PHY) layers of the gNB. If the CU 21 is a gNB-CU and the DUs 22 are gNB-DUs, the interfaces 201 can be F1 interfaces. The CU 21 can include a CU-CP and a CU-UP.

The term "conditional mobility" is used herein. Conditional mobility is a generic term that refers to one or more of CHO, CPA, intra-SN CPC (or conditional SN modification), and inter-SN CPC (or conditional SN change).

The following example embodiments provide conditional mobility enhancements. In particular, the following example embodiments provide conditional mobility enhancements to support a feature or mode of operation referred to as "Multi-Radio Dual Connectivity (MR-DC) with selective activation of cell groups". In this specification, this feature or mode of operation may be applied to conditional mobility that does not necessarily involve MR-DC, i.e., CHO. In addition, this feature or mode of operation may be applied to an enhanced CHO in which an SCG (or at least a PSCell) is added in conjunction with the execution of the CHO. As defined herein, this feature or mode of operation allows, for example, a subsequent second conditional mobility without at least reinitializing the conditional mobility preparations after a serving cell, serving cell group, PSCell, or SCG is changed or added in a first conditional mobility. In other words, as defined herein, the feature or mode of operation allows, for example, the UE 3 to reuse or maintain at least a portion of the candidate target cell configurations or candidate PSCell configurations (e.g., one or any combination of RB configuration, CG configuration, SCG configuration, radio resource configuration, and SCG radio resource configuration) received from the network in the first conditional mobility for a subsequent second conditional mobility. At least some of the execution conditions for the first conditional mobility may be reconfigured, updated, or modified for the second conditional mobility. Similarly, at least some of the information in the security key configuration (e.g., sk-Counter, Next Hop (NH), NH Chaining Count (NCC)) or security key information (e.g., SN Security Key) for the first conditional mobility may be reconfigured, updated, or modified for the second conditional mobility. The type of the second conditional mobility may be different from the type of the first conditional mobility. For example, the first conditional mobility may be a CPA, while the second conditional mobility may be an inter-SN CPC or an intra-SN CPC. Alternatively, the first conditional mobility may be an inter-SN CPC, while the second conditional mobility may be an intra-SN CPC.

This feature or mode of operation may be referred to as, for example, but not limited to, selective cell activation, selective cell group (CG) activation, selective SCG activation, adaptive cell switch, adaptive CG switch, adaptive SCG switch, subsequent cell change, subsequent CG change, subsequent CG selection, CPC kept, or CHO kept. For ease of explanation, in the following example embodiments, the feature or mode of operation is referred to as selective CG activation or selective cell activation. The term "selective CG activation" may be used for conditional mobility (e.g., CPA, inter-SN CPC, intra-SN CPC) with MR-DC. On the other hand, the term "selective cell activation" may be used for conditional mobility (e.g., CHO) that does not necessarily involve MR-DC.

In this specification, the combination of a candidate Special Cell (SpCell) and one or more SCells may be referred to as a candidate Cell Group (CG) set for conditional mobility or selective CG activation. Selective CG activation can be thought of as changing or switching the serving SCG among multiple candidate CG sets. A candidate CG set contains at least a candidate SpCell and optionally one or more SCells. A candidate cell (candidate SpCell) may be a current SCell (i.e., an SCell in the current SCG) or a non-serving cell that is not currently provided to the UE 3. The UE 3 may be configured with multiple candidate CG sets with different candidate SpCells. In the case of conditional mobility (e.g., CHO) with respect to the MCG, candidate SpCells are candidate PCells, and multiple candidate CG sets are multiple candidate MCG sets. On the other hand, in the case of conditional mobility with respect to the SCG (e.g., CPA, intra-SN CPC, inter-SN CPC), candidate SpCells are candidate PSCells, and multiple candidate CG sets are multiple candidate SCG sets.

The terms "MN RRC Message", "MN RRC Reconfiguration Message", "SN RRC Message", and "SN RRC Reconfiguration Message" are used herein. These terms are used for convenience only to distinguish RRC messages generated by the MN from RRC messages generated by the SN. Accordingly, MN RRC messages and MN RRC Reconfiguration messages may be referred to simply as RRC messages and RRC Reconfiguration messages. Similarly, SN RRC messages and SN RRC Reconfiguration messages may be referred to simply as RRC messages and RRC Reconfiguration messages.

### First Example Embodiment

This example embodiment provides improved intra-SN CPC for selective CG activation. Specifically, this example embodiment relates to clarifying various procedures for selective CG/cell activation. An example configuration of a radio communication system according to this example embodiment may be the same as the example shown in Figs. 1 and 2.

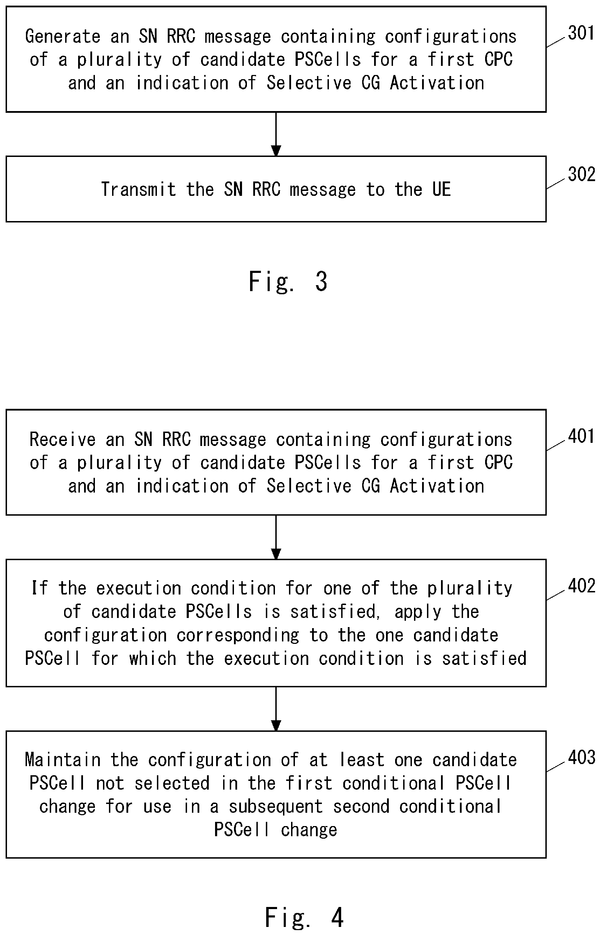

In some implementations, when initiating an intra-SN CPC, the SN 2 determines whether or not to perform, use, prepare, or recommend selective CG activation. In other words, when providing a CPC configuration for a first CPC to the UE 3, the SN 2 determines whether a configuration of at least one candidate PSCell not selected for the first CPC needs to be maintained by the UE 3 for a subsequent second CPC. If the decision is made to perform, use, prepare, or recommend selective CG activation, the SN 2 operates as shown in Fig. 3.

In step 301, the SN 2 generates an SN RRC message including configurations of a plurality of candidate PSCells for the first CPC and an indication of selective CG activation. The indication of selective CG activation indicates to the UE 3 that selective CG activation is applied, required, recommended, or available. In other words, the indication of selective CG activation indicates that a mode of operation is applied, required, recommended, or available in which a configuration of at least one candidate PSCell that was not selected in the first CPC is to be reused by the UE 3 for a subsequent second CPC. The indication of selective CG activation may be referred to, for example, as a selective CG activation configuration. In step 302, the SN 2 transmits the generated SN RRC message to the UE 3. The SN 2 may transmit the SN RRC message to the UE 3 via the MN 1, or via a direct signaling radio bearer (i.e., Signalling Radio Bearer 3 (SRB3)) between the SN 2 and the UE 3.

Fig. 4 shows the operation of the UE 3 corresponding to the operation of the SN 2 in Fig. 3. In step 401, the UE 3 receives an SN RRC message from the SN 2 containing configurations of a plurality of candidate PSCells for the first CPC and an indication of selective CG activation. In step 402, if an execution condition for one of the plurality of candidate PSCells is satisfied, the UE 3 applies the configuration corresponding to the selected one candidate PSCell (i.e., the candidate PSCell whose execution condition is satisfied). In step 403, if the SN RRC message of step 401 includes an indication of selective CG activation, the UE 3 retains the configuration of at least one candidate PSCell that was not selected in the first CPC for use in a subsequent second CPC.

The operations of the SN 2 and the UE 3 described with reference to Fig. 3 and Fig. 4 may be modified as appropriate. For example, after the completion of the first CPC, the SN 2 may update or modify a CPC execution condition for at least one candidate PSCell that was not selected in the first CPC for the second CPC. For example, the SN 2 may switch the reference cell in one or more CPC execution conditions (e.g., CondEvent A3 or CondEvent A5) from the source PSCell of the first CPC to the PSCell selected in the first CPC. In this case, after completion of the first CPC, the SN 2 may transmit an SN RRC message to the UE 3 containing the updated or modified CPC execution conditions for the second CPC. The UE 3 may receive this SN RRC message and update the CPC execution conditions for at least one candidate PSCell that was not selected in the first CPC.

For example, the UE 3 may reuse execution conditions with respect to candidate PSCells not selected in the first CPC in a subsequent second CPC, while autonomously switching the reference cell in the execution conditions in question from the source PSCell in the first CPC to the candidate PSCell selected in the first CPC. In other words, the UE 3 may autonomously update or modify the reference cell in the execution conditions of the first CPC. This allows the UE 3 to start evaluating the execution conditions for the subsequent second CPC without receiving a signal from the SN 2 to update the execution conditions.

For example, the UE 3 may retain a configuration of the source PSCell after the completion of the first CPC without releasing it in order to use the source PSCell of the first CPC as one of the candidate PSCells in the second CPC. This allows the source cell of a CPC to be used as one of the candidate PSCells for a subsequent CPC. The SN 2 may inform the UE 3 whether the source PSCell in the first CPC is to be a candidate PSCell in a subsequent second CPC. Specifically, the SN 2 may use the SN RRC message for configuring the first CPC (step 302 in Fig. 3, step 401 in Fig. 4) to be sent to the UE 3 to indicate to the UE 3 that the source PSCell in the first CPC is to be one of the candidate PSCells in the subsequent second CPC (Step 401 of Figure 4). If indicated by the SN RRC message (step 302 in Fig. 3, step 401 in Fig. 4), the UE 3 may retain the source PSCell configuration without releasing it after the completion of the first CPC.

After the completion of the first CPC, the SN 2 may transmit to the UE 3 an execution condition for a subsequent second conditional mobility with respect to a new candidate PSCell corresponding to the source PSCell of the first CPC. The SN 2 may transmit this execution condition to the UE 3 using an SN RRC message. The UE 3 may receive from the SN 2 a CPC execution condition for a new candidate PSCell corresponding to the source PSCell of the first CPC and use it for the second CPC.

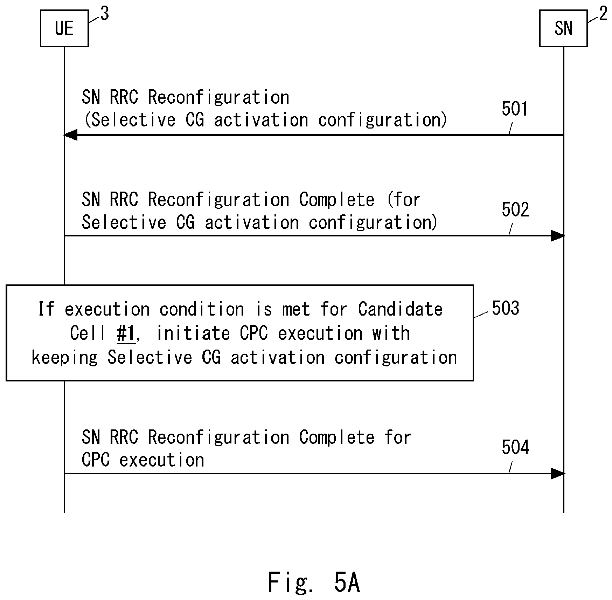

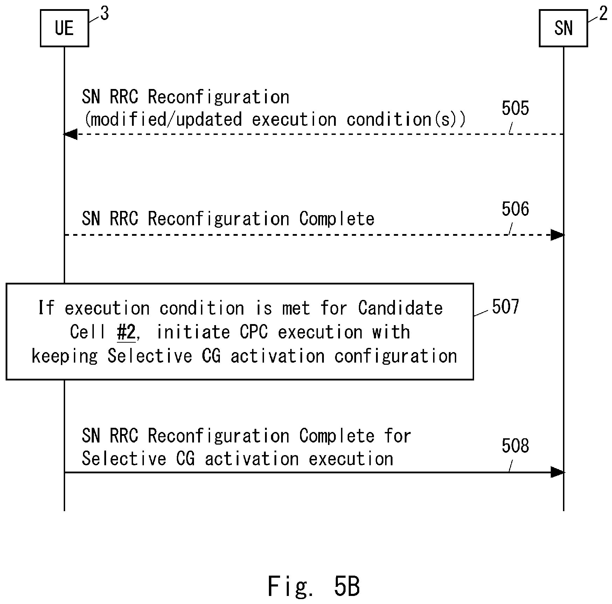

Figs. 5A and 5B show an example of signaling for an intra-SN CPC procedure in which a direct SRB (i.e., SRB3) is used between the SN 2 and the UE 3. In step 501, the SN 2 sends an SN RRC Reconfiguration message to the UE 3 via an SRB3 to configure a CPC. The SN RRC Reconfiguration message contains a CPC configuration and a selective CG activation indication (or configuration). As described above, the CPC configuration for an intra-SN CPC includes configurations of one or more candidate PSCells and associated CPC execution conditions. There is no particular restriction on how the CPC configuration and the selective CG activation configuration are included in the SN RRC Reconfiguration message. Specifically, an information element (IE) or field indicating the CPC configuration may be independent of an IE or field indicating the selective CG activation configuration. In this case, the IE or field indicating the selective CG activation configuration may imply that the associated CPC configuration is applicable to (or subject to) selective CG activation. Alternatively, an IE or field indicating the CPC configuration may contain an IE or field indicating the selective CG activation configuration, or vice versa. For example, the IE or field indicating the CPC configuration is condRRCReconfig, and an SN RRC Reconfiguration message contained therein may further contain the IE or field indicating the selective CG activation configuration. In this case, it may mean that the configurations specified by that SN RRC Reconfiguration are applicable to (or subject to) selective CG activation. The IE or field indicating the selective CG activation configuration may be referred to as, for example, "selectiveCG-Activation", "adaptiveCG-Switch", "subsequentCell-Change", "subsequentCG-Change", or "cpc- Kept".

In step 502, the UE 3 applies the new configuration and starts evaluating the CPC execution conditions for a plurality of candidate PSCells. The UE 3 maintains the connection to the source PSCell and responds to the SN 2 with an SN RRC Reconfiguration Complete message via the SRB3.

In step 503, if the execution condition(s) for a candidate PSCell (here, candidate cell #1) are met, the UE 3 initiates the CPC execution, keeping the selective CG activation configuration (and the CPC configuration). Specifically, the UE 3 detaches from the source PSCell, applies the stored configuration corresponding to the selected candidate PSCell (i.e., the candidate PSCell whose execution condition(s) are satisfied), and synchronizes with that candidate PSCell. In step 504, the UE 3 completes the CPC execution procedure by sending an SN RRC Reconfiguration Complete message to the selected candidate PSCell (i.e., cell #1).

After the CPC execution is completed, the UE 3 retains the configurations of one or more non-selected candidate PSCells for reuse in a subsequent CPC. The UE 3 may retain the CPC execution conditions associated with the one or more non-selected candidate PSCells. As described above, the UE 3 may autonomously switch the reference cell for these CPC execution conditions from the source PSCell to the selected candidate PSCell (i.e., cell #1). The UE 3 may determine whether to autonomously switch the reference cell in the CPC execution conditions based on the selective CG activation configuration received in step 501. Alternatively, the UE 3 may receive updated or modified CPC execution conditions from the SN 2.

In addition, the UE 3 may use the source PSCell of the first CPC as one of the candidate PSCells of the subsequent CPC. The UE 3 may determine whether the source PSCell of the first CPC is to be a new candidate PSCell based on the selective CG activation configuration received in step 501.

In step 505, the UE 3 may receive an SN RRC Reconfiguration message from the SN 2 via the SRB3 indicating updated or modified CPC execution conditions. This SN RRC Reconfiguration message may include CPC execution conditions for the source PSCell of the first CPC, which is considered to be a new candidate PSCell. In step 506, the UE 3 applies the received CPC execution conditions and responds via the SRB3 to the SN 2 with an SN RRC Reconfiguration Complete message. Steps 505 and 506 may be omitted if it is not necessary to update, modify or add CPC execution conditions.

After the completion of the first CPC, the UE 3 continues to evaluate the execution conditions of the non-selected candidate PSCell(s). The UE 3 may initiate the evaluation of CPC execution condition(s) for the source PSCell of the first CPC, which is considered a new candidate PSCell. In step 507, if the execution condition(s) for a candidate PSCell (here, candidate cell #2) are met, the UE 3 initiates the CPC execution, keeping the selective CG activation configuration (and the CPC configuration). Specifically, the UE 3 detaches from the current source PSCell (i.e., cell #1), applies the stored configuration corresponding to the selected candidate PSCell (i.e., the candidate PSCell whose execution condition(s) are satisfied), and synchronizes with that candidate PSCell. In step 508, the UE 3 completes the CPC execution procedure by sending an SN RRC Reconfiguration Complete message to the selected candidate PSCell (i.e., cell #2).

After step 508, the UE 3 may still continue to evaluate the CPC execution condition(s) for the remaining non-selected candidate PSCell(s). The UE 3 may autonomously switch the reference cell for those CPC execution conditions from the source PSCell (i.e., cell #1) to the selected candidate PSCell (i.e., cell #2). The UE 3 may determine whether to autonomously switch the reference cell in the CPC execution conditions based on the selective CG activation configuration received in step 501. Alternatively, the UE 3 may receive updated or modified CPC execution conditions from the SN 2. In addition, the UE 3 may use the source PSCell (i.e., cell #1) as one of the candidate PSCells. The UE 3 may determine whether the source PSCell (i.e., cell #1) is to be a new candidate PSCell based on the selective CG activation configuration received in step 501.

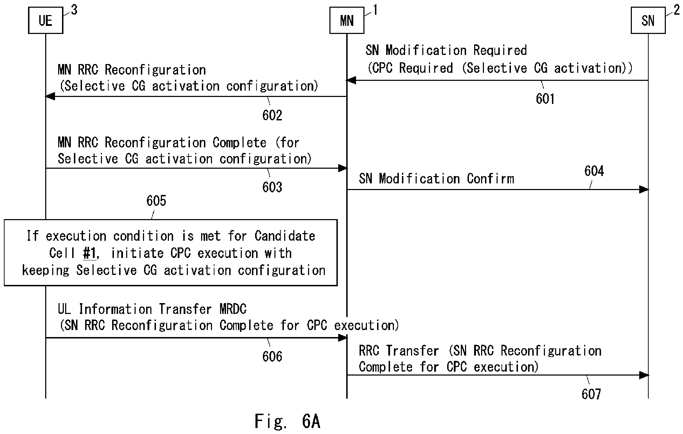

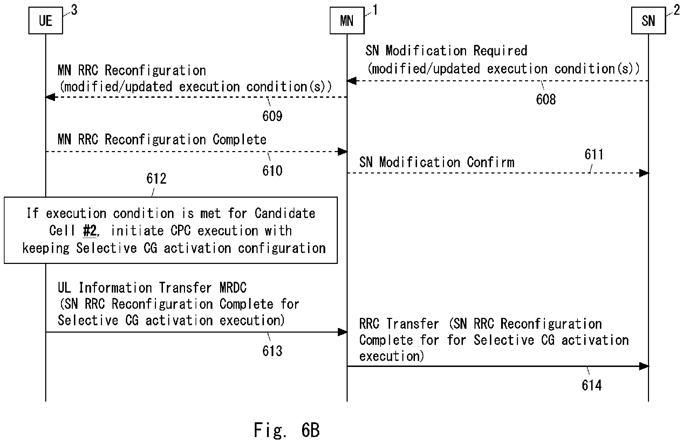

Figs. 6A and 6B show an example of signaling for an intra-SN CPC procedure where no direct SRB (i.e., SRB3) is used between the SN 2 and the UE 3. The procedure in Figs. 6A and 6B is identical to the procedure in Figs. 5A and 5B, except that the SN RRC messages between the SN 2 and the UE 3 are forwarded through the MN 1. Specifically, steps 601 and 602 correspond to step 501. In step 601, the SN 2 sends to the MN 1 an SN Modification Required message containing an SN RRC Reconfiguration message including the CPC configuration. In step 602, the MN 1 forwards the SN RRC Reconfiguration message to the UE 3 by including it in an MN RRC Reconfiguration message.

Steps 603 and 604 correspond to step 502. In step 603, the UE 3 responds to the MN 1 with an MN RRC Reconfiguration message containing an SN RRC Reconfiguration Complete message. The UE 3 maintains the connection with the source PSCell and initiates the evaluation of CPC execution conditions for multiple candidate PSCells. In step 604, the MN 1 forwards the SN RRC Reconfiguration Complete message to SN 2 by including it in an SN Modification Confirm message.

Step 605 corresponds to step 503. Steps 606 and 607 correspond to step 504. In step 606, the UE 3 completes the CPC execution procedure by sending a UL Information Transfer MRDC message to the MN 1. The UL Information Transfer MRDC message contains an (embedded) SN RRC Reconfiguration Complete message to the selected candidate PSCell (i.e., cell #1). In step 607, the MN 1 forwards the SN RRC Reconfiguration Complete message to the SN 2 by including it in an RRC Transfer message.

Steps 608 and 609 correspond to step 505. In step 608, the SN 2 may send to the MN 1 an SN Modification Required message containing an SN RRC Reconfiguration message indicating updated or modified CPC execution conditions. In step 609, the MN 1 forwards the SN RRC Reconfiguration message to the UE 3 by including it in an MN RRC Reconfiguration message.

Steps 610 and 611 correspond to step 506. In step 610, the UE 3 responds to the MN 1 with an MN RRC Reconfiguration message containing an SN RRC Reconfiguration Complete message. In step 611, the MN 1 forwards the SN RRC Reconfiguration Complete message to the SN 2 by including it in the SN Modification Confirm message.

Step 612 corresponds to step 507. Steps 613 and 614 correspond to step 508. In step 613, the UE 3 completes the CPC execution procedure by sending a UL Information Transfer MRDC message to the MN 1. The UL Information Transfer MRDC message contains an (embedded) SN RRC Reconfiguration Complete message to the selected candidate PSCell (i.e., cell #2). In step 607, the MN 1 forwards the SN RRC Reconfiguration Complete message to the SN 2 by including it in an RRC Transfer message.

### Second Example Embodiment

This example embodiment provides details on signaling between a CU and a DU to support selective cell/CG activation. An example configuration of a radio communication system according to this example embodiment may be the same as the example shown in Figs. 1 and 2.

The SN 2 in this example embodiment may have the CU-DU configuration shown in Fig. 2. The SN 2 may include a CU 21 and one or more DUs 22. In this case, the SN 2 supports intra-DU conditional mobility of the UE 3 within a single DU. The SN 2 also supports intra-DU conditional mobility of the UE 3 between DUs. The intra-DU conditional mobility and the inter-DU conditional mobility can be CPC or CPA. The inter-DU conditional mobility may be inter-SN CPC.

Further or alternatively, in this example embodiment, the MN 1 may have the CU-DU configuration shown in Fig. 2. The MN 1 may include a CU 21 and one or more DUs 22. In this case, the MN 1 supports intra-DU conditional mobility of the UE 3 within a single DU. The MN 1 also supports intra-DU conditional mobility of the UE 3 between DUs. The intra-DU conditional mobility and inter-DU conditional mobility can be CHO, i.e., conditional intra-MN handover (or conditional PCell change).

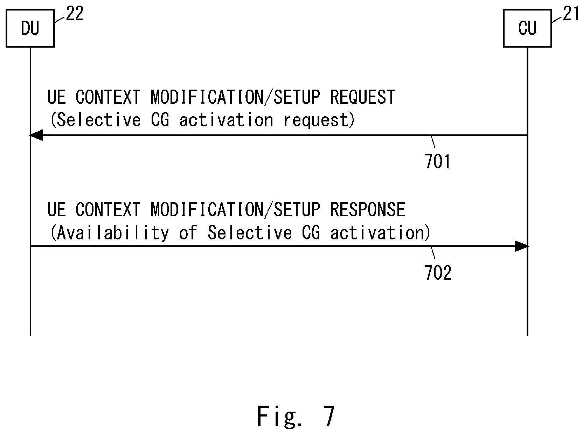

Fig. 7 shows an example of signaling between the CU 21 and the DU 22. As described above, the CU 21 and the DU 22 may belong to the SN 2 or to the MN 1. In step 701, the CU 21 sends to the DU 22 a CU-DU control message (e.g., F1AP message) indicating a request for a first conditional mobility for the UE 3. The control message requests the DU 22 to prepare one or more candidate target cells for the first conditional mobility for the UE 3. The first conditional mobility may be CHO, CPA, or CPC. If the first conditional mobility is CPA or CPC, a candidate target cell means a candidate (target) PSCell.

In addition, the control message of step 701 includes an indication of selective cell/CG activation. The indication of selective cell/CG activation indicates to the DU 22 that selective cell/CG activation is applied, required, recommended or available. In other words, the indication of selective cell/CG activation indicates that a mode of operation is applied, required, recommended, or available in which a configuration of at least one candidate target cell that was not selected in the first conditional mobility is to be reused by the UE 3 for a subsequent second conditional mobility. For example, the indication of selective cell/CG activation may be referred to as a request for selective cell/CG activation. The first and second conditional mobilities may both be CHO. The first and second conditional mobilities may both be CPC. Alternatively, the first conditional mobility may be CPA and the second conditional mobility may be CPC. This allows the DU 22 to recognize whether the preparation of the candidate target cell(s) for the first conditional mobility needs to be maintained after the first conditional mobility to any of the candidate target cells is completed.

In step 702, the DU 22 sends a response message to the CU 21. The response message may indicate whether or not the DU 22 has determined that selective cell/CG activation is not applicable to one or more candidate target cells prepared by the DU 22. Alternatively, the response message may indicate whether or not the DU 22 has prepared selective cell/CG activation for one or more candidate target cells prepared by the DU 22. If the DU 22 can accept the preparation of one or more candidate target cells for the first conditional mobility but cannot accept the request for selective cell/CG activation, the DU 22 may inform the CU 21 in the response message of its acceptance of the preparation for the first conditional mobility and rejection of the selective cell/CG activation.

The request message of step 701 may be a UE CONTEXT MODIFICATION REQUEST message or a UE CONTEXT SETUP REQUEST message. The response message of step 702 may be a UE CONTEXT MODIFICATION RESPONSE message or a UE CONTEXT SETUP RESPONSE message. More specifically, if the first conditional mobility is intra-DU mobility, the request message of step 701 is a UE CONTEXT MODIFICATION REQUEST message and the response message of step 702 is a UE CONTEXT MODIFICATION RESPONSE message. If the first conditional mobility is inter-DU mobility, the request message of step 701 may be a UE CONTEXT SETUP REQUEST message and the response message of step 702 may be a UE CONTEXT SETUP RESPONSE message.

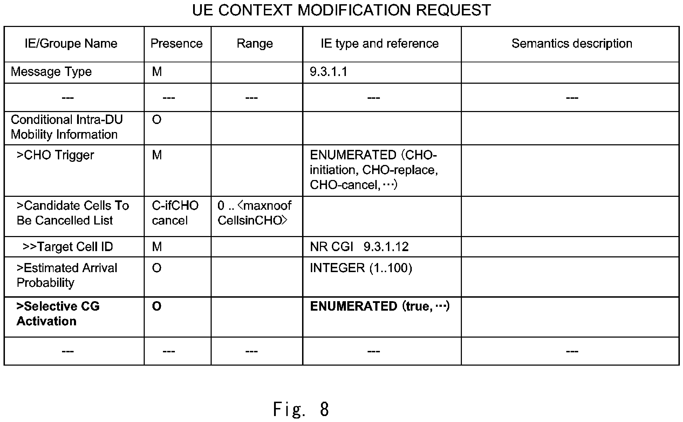

Fig. 8 shows a specific example of the format of a UE CONTEXT MODIFICATION REQUEST message. In the example in Fig. 8, if a Selective CG Activation IE is included in a Conditional Intra-DU Mobility Information IE in the UE CONTEXT MODIFICATION REQUEST message, the DU 22 is aware that selective cell/CG activation is applied, required, recommended, or available for a first conditional mobility indicated by the Conditional Intra-DU Mobility Information IE. In other words, the DU 22 recognizes that it is requested to maintain the preparation for the first conditional mobility indicated by the Conditional Intra-DU Mobility Information IE for a subsequent conditional mobility after the first conditional mobility.

The format shown in Fig. 8 may be modified as appropriate. For example, one of the possible values of the CHO Trigger IE, an enumerated-type IE, may be a value indicating a selective cell/CG activation request (e.g., Selective CG Activation-initiation).

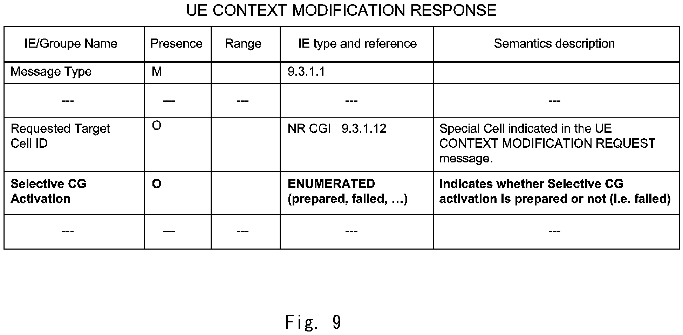

Fig. 9 shows a specific example of the format of a UE CONTEXT MODIFICATION RESPONSE message. In the example in Fig. 9, when a Selective CG Activation IE is included in the UE CONTEXT MODIFICATION RESPONSE message, the IE indicates whether or not the selective cell/CG activation has been accepted (or prepared) by the DU 22.

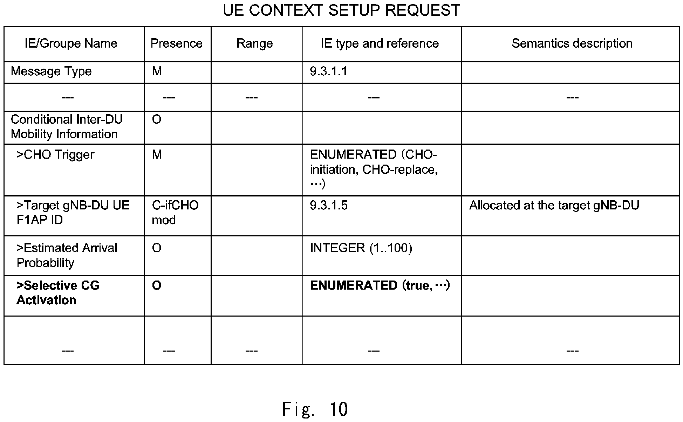

Fig. 10 shows a specific example of the format of a UE CONTEXT SETUP REQUEST message. In the example in Fig. 10, if a Selective CG Activation IE is included in a Conditional Inter-DU Mobility Information IE in the UE CONTEXT SETUP REQUEST message, the DU 22 is aware that selective cell/CG activation is applied, required, recommended, or available for a first conditional mobility indicated by the Conditional Inter-DU Mobility Information IE. In other words, the DU 22 recognizes that it is requested to maintain the preparation for the first conditional mobility indicated by the Conditional Inter-DU Mobility Information IE for a subsequent conditional mobility after the first conditional mobility.

The format shown in Fig. 10 may be modified as appropriate. For example, one of the possible values of the CHO Trigger IE, an enumerated-type IE, may be a value indicating a selective cell/CG activation request (e.g., Selective CG Activation-initiation).

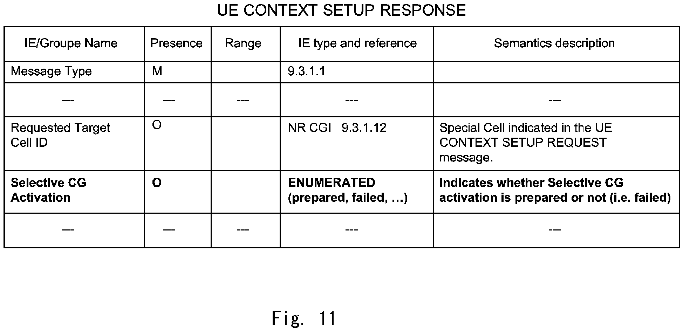

Fig. 11 shows a specific example of the format of a UE CONTEXT SETUP RESPONSE message. In the example in Fig. 11, when a Selective CG Activation IE is included in the UE CONTEXT SETUP RESPONSE message, the IE indicates whether or not the selective cell/CG activation has been accepted (or prepared) by the DU 22.

The signaling between the CU and DU described in this example embodiment can help support selective cell/CG activation in a CU-DU configuration.

### Third Example Embodiment

This example embodiment provides details on signaling between a CU and a DU to support selective cell/CG activation. An example configuration of a radio communication system according to this example embodiment may be the same as the example shown in Figs. 1 and 2.

The SN 2 in this example embodiment may have the CU-DU configuration shown in Fig. 2. The SN 2 may include a CU 21 and one or more DUs 22. In this case, the SN 2 supports intra-DU conditional mobility of the UE 3 within a single DU. The SN 2 also supports intra-DU conditional mobility of the UE 3 between DUs. The intra-DU conditional mobility and the inter-DU conditional mobility can be CPC or CPA. The inter-DU conditional mobility may be inter-SN CPC.

Further or alternatively, in this example embodiment, the MN 1 may have the CU-DU configuration shown in Fig. 2. The MN 1 may include a CU 21 and one or more DUs 22. In this case, the MN 1 supports intra-DU conditional mobility of the UE 3 within a single DU. The MN 1 also supports intra-DU conditional mobility of the UE 3 between DUs. The intra-DU conditional mobility and inter-DU conditional mobility can be CHO, i.e., conditional intra-MN handover (or conditional PCell change).

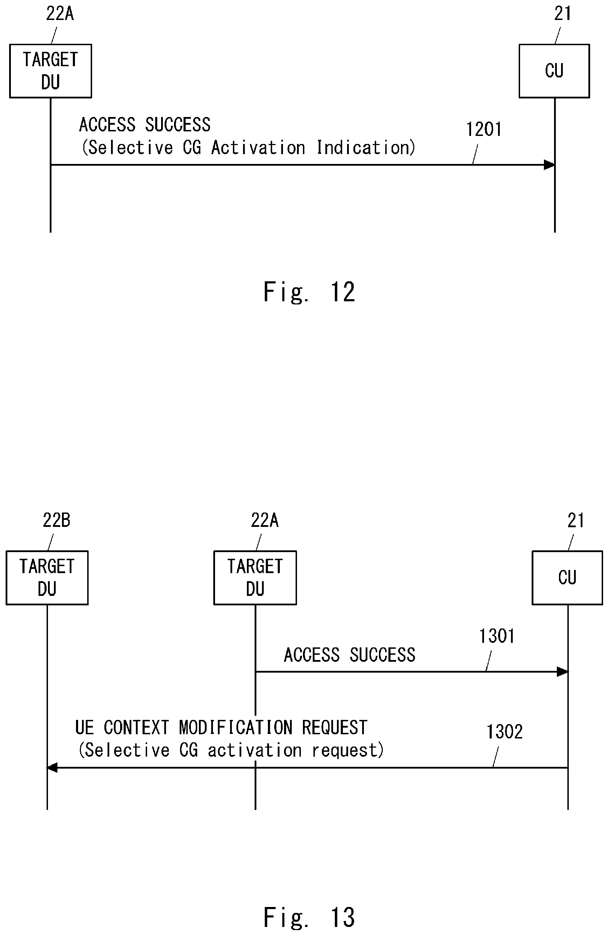

Fig. 12 shows an example of signaling between the CU 21 and a target DU 22A. In step 1201, the target DU 22A sends to the CU 21 a CU-DU control message (e.g., F1AP message) indicating the candidate target cell that the UE 3 has successfully accessed during the first conditional mobility. The control message may be an ACCESS SUCCESS message. The first conditional mobility may be CHO, CPA, or CPC. If the first conditional mobility is CPA or CPC, a candidate target cell means a candidate (target) PSCell.

In addition, the control message indicates that the preparation of one or more other candidate target cells accepted by the target DU 22A for the first conditional mobility is to be maintained for a subsequent second conditional mobility. The first and second conditional mobilities may both be CHO. The first and second conditional mobilities may both be CPC. Alternatively, the first conditional mobility may be CPA and the second conditional mobility may be CPC. This allows the CU 21 to recognize that the preparation of the candidate target cell(s) by the target DU 22A for the first conditional mobility is maintained after the first conditional mobility to the selected candidate target cell is completed.

In response to receipt of the message of step 1201, the CU 21 may operate as follows. After receipt of the message of step 1201, the CU 21 may inform the target DU(s) of the first conditional mobility, other than the target DU 22A, that the preparation of one or more candidate target cells for the first conditional mobility needs to be maintained for the second conditional mobility. The CU 21 may send this notification via a UE CONTEXT MODIFICATION REQUEST message. This allows other target DUs to recognize that the preparation of candidate target cells for the first conditional mobility needs to be maintained after the first conditional mobility is completed.

Additionally or alternatively, after receiving the message in step 1201, the CU 21 may notify the source DU providing the source cell for the first conditional mobility that the configuration of the source cell is to be maintained for the second conditional mobility. The CU 21 may send this notification via a UE CONTEXT MODIFICATION REQUEST message. This allows the source DU to recognize that the configuration of the source cell of the first conditional mobility needs to be maintained for a subsequent second conditional mobility. In other words, the source DU can recognize that the source cell of the first conditional mobility should be one of the candidate target cells for a subsequent second conditional mobility.

### Fourth Example Embodiment

This example embodiment provides details on signaling between a CU and a DU to support selective cell/CG activation. An example configuration of a radio communication system according to this example embodiment may be the same as the example shown in Figs. 1 and 2.

The SN 2 in this example embodiment may have the CU-DU configuration shown in Fig. 2. The SN 2 may include a CU 21 and one or more DUs 22. In this case, the SN 2 supports intra-DU conditional mobility of the UE 3 within a single DU. The SN 2 also supports intra-DU conditional mobility of the UE 3 between DUs. The intra-DU conditional mobility and the inter-DU conditional mobility can be CPC or CPA. The inter-DU conditional mobility may be inter-SN CPC.

Further or alternatively, in this example embodiment, the MN 1 may have the CU-DU configuration shown in Fig. 2. The MN 1 may include a CU 21 and one or more DUs 22. In this case, the MN 1 supports intra-DU conditional mobility of the UE 3 within a single DU. The MN 1 also supports intra-DU conditional mobility of the UE 3 between DUs. The intra-DU conditional mobility and inter-DU conditional mobility can be CHO, i.e., conditional intra-MN handover (or conditional PCell change).

Fig. 13 shows an example of signaling between the CU 21 and the two target DUs 22A and 22B. In step 1301, the target DU 22A sends to the CU 21 a CU-DU control message (e.g., F1AP message) indicating the candidate target cell that the UE 3 successfully accessed during the first conditional mobility. The control message may be identical to an existing ACCESS SUCCESS message.

In step 1302, after receiving the message in step 1301, the CU 21 informs the target DU 22B of the first conditional mobility, which is different from the target DU 22A, that the preparation of one or more candidate target cells for the first conditional mobility needs to be maintained for a second conditional mobility. This allows the target DU 22B to recognize that the preparation of the candidate target cells for the first conditional mobility needs to be maintained after the first conditional mobility is completed.

Further, after receiving the message in step 1301, the CU 21 may notify the source DU providing the source cell for the first conditional mobility that the configuration of the source cell is to be maintained for the second conditional mobility. The CU 21 may send this notification via a UE CONTEXT MODIFICATION REQUEST message. This allows the source DU to recognize that the configuration of the source cell of the first conditional mobility needs to be maintained for a subsequent second conditional mobility. In other words, the source DU can recognize that the source cell of the first conditional mobility should be one of the candidate target cells for a subsequent second conditional mobility.

The operation of the CU 11, the MN 1, the candidate SN 4, and the UE 3 shown in Fig. 13 may be modified as follows.

### Fifth Example Embodiment

This example embodiment provides details on signaling between a CU and a DU to support selective cell/CG activation. An example configuration of a radio communication system according to this example embodiment may be the same as the example shown in Figs. 1 and 2.

The SN 2 in this example embodiment may have the CU-DU configuration shown in Fig. 2. The SN 2 may include a CU 21 and one or more DUs 22. In this case, the SN 2 supports intra-DU conditional mobility of the UE 3 within a single DU. The SN 2 also supports intra-DU conditional mobility of the UE 3 between DUs. The intra-DU conditional mobility and the inter-DU conditional mobility can be CPC or CPA. The inter-DU conditional mobility may be inter-SN CPC.

Further or alternatively, in this example embodiment, the MN 1 may have the CU-DU configuration shown in Fig. 2. The MN 1 may include a CU 21 and one or more DUs 22. In this case, the MN 1 supports intra-DU conditional mobility of the UE 3 within a single DU. The MN 1 also supports intra-DU conditional mobility of the UE 3 between DUs. The intra-DU conditional mobility and inter-DU conditional mobility can be CHO, i.e., conditional intra-MN handover (or conditional PCell change).

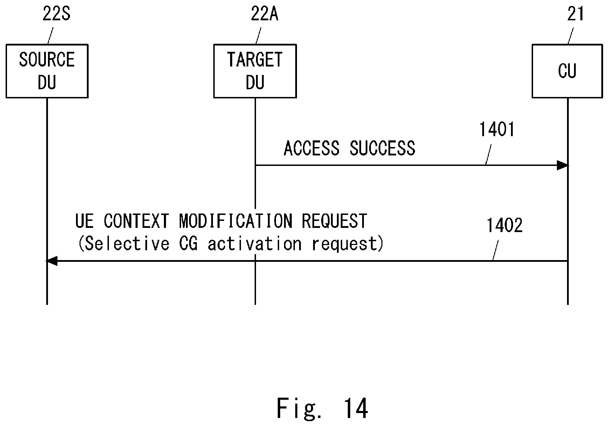

Fig. 14 shows an example of signaling between the CU 21 and the two target DUs 22A and 22B. In step 1401, the target DU 22A sends to the CU 21 a CU-DU control message (e.g., F1AP message) indicating the candidate target cell that the UE 3 successfully accessed during the first conditional mobility. The control message may be identical to an existing ACCESS SUCCESS message.

In step 1402, after receiving the message in step 1401, the CU 21 notifies the source DU 22S providing the source cell for the first conditional mobility that the configuration of the source cell is to be maintained for the second conditional mobility. The CU 21 may send this notification via a UE CONTEXT MODIFICATION REQUEST message. This allows the source DU 22S to recognize that the configuration of the source cell of the first conditional mobility needs to be maintained for a subsequent second conditional mobility. In other words, the source DU 22S can recognize that the source cell of the first conditional mobility should be one of the candidate target cells for a subsequent second conditional mobility.

### Sixth Example Embodiment

This example embodiment provides for selective activation of cell groups within a single RAN node (e.g., MN 1 or SN 2) by L1/L2 based inter-cell mobility. An example configuration of a radio communication system according to this example embodiment may be the same as the example shown in Figs. 1 and 2.

The L1/L2 based inter-cell mobility may be inter-cell mobility based on a Layer 1 (L1) measurement. The L1 measurement may be an L1 Synchronization Signal (SS)-RSRP measurement, or an L1 Channel State Information (CSI)-RSRP measurement, or both. Alternatively, the L1/L2 based inter-cell mobility may be inter-cell mobility using L1 signaling or L2 signaling. The L1 signaling may be, for example, Uplink Control Information (UCI) on a Physical Uplink Control Channel (PUCCH). The L2 signaling may be, for example, a Medium Access Control (MAC) Control Element (CE). Alternatively, the L1/L2 based inter-cell mobility may be inter-cell mobility based on L1 measurements and using L1 or L2 signaling.

In response to the triggering, initiation or completion of the execution (from the L1/L2 perspective) of the L1/L2 based inter-cell mobility, the L1 (Physical (PHY) layer) or L2 (e.g., MAC layer) of the UE 3 may notify the RRC layer of the UE 3 of the execution of the L1/L2 based inter-cell mobility. On this occasion, the L1 or L2 of the UE 3 may inform the RRC layer of the candidate cell (e.g., PCell, PSCell) to which the serving cell is to be changed (or switched). Alternatively, the L1 or L2 of the UE 3 may inform the RRC layer of the CG-set after the change or switch. The RRC layer of the UE 3 may change (or switch) the CG set to be used in response. Similarly, the L1 or L2 of the RAN node may inform the RRC layer of the RAN node in response to detecting that the UE 3 is performing (or has completed performing) L1/L2 based inter-cell mobility. On this occasion, the L1 or L2 of the RAN node may inform the RRC layer of the candidate cell (e.g., PCell, PSCell) to which the serving cell is to be changed (or switched). Alternatively, the L1 or L2 of the RAN node may inform the RRC layer of the CG-set after the change or switch.

The RAN node (i.e., MN 1 or SN 2) may transmit to the UE 3 in advance configurations for the candidate cells under its control and information for executing L1/L2 based inter-cell mobility. These may be collectively referred to as L1/L2 based inter-cell mobility configuration information (e.g., L1/L2 mobility configuration). Each configuration for a candidate target cell may include, for example, a cell group configuration (CellGroupConfig) (generated by a DU) and a radio bearer configuration (RadioBearerConfig) (generated by the CU). The information for executing L1/L2 based inter-cell mobility may include execution/triggering conditions (generated by a DU or by the CU).

If a candidate cell is a candidate Special Cell (SpCell), the RAN node and the UE 3 consider a combination of the SpCell and one or more SCells as a candidate Cell Group (CG) set. A candidate CG set includes at least a candidate SpCell and optionally one or more SCells. A candidate cell (candidate SpCell) can be a current SCell (i.e., a SCell in the current SCG) or a non-serving cell that is not currently provided to the UE 3. The UE 3 is configured with multiple candidate CG sets with different candidate SpCells. If the RAN node is the MN 1, the candidate SpCells are candidate PCells and the multiple candidate CG sets are multiple candidate MCG sets. On the other hand, if the RAN node is the SN 2, the candidate SpCells are candidate PSCells and the multiple candidate CG sets are multiple candidate SCG sets. The UE 3 switches the serving CG among the multiple candidate CG sets through Layer 1/Layer 2 based inter-cell mobility.

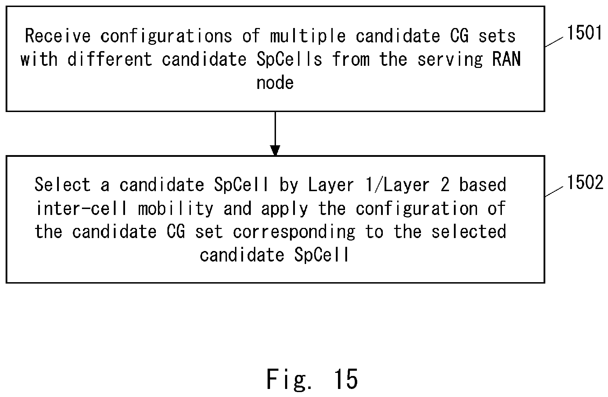

Fig. 15 shows an example of the operation of the UE 3. In step 1501, the UE 3 receives from the serving RAN node (i.e., MN 1 or SN 2) configurations of a plurality of candidate CG sets whose candidate SpCells are different from each other. In step 1502, the UE 3 selects one candidate SpCell by Layer 1/Layer 2 based inter-cell mobility and applies the configuration of the candidate CG set corresponding to the selected candidate SpCell. In other words, the UE 3 switches from the current CG set to the candidate CG set corresponding to the selected candidate SpCell.

In an example, the UE 3 initiates a PSCell change when it determines, based on L1 measurements, that the execution/triggering condition for a candidate cell has been satisfied. The lower layer (e.g., MAC layer or Physical (PHY) layer) of the UE 3 may signal the PSCell change to the RRC layer of the UE 3, and the RRC layer may change or switch the RRC configuration to the configuration corresponding to the selected candidate cell.

The UE 3 (e.g., PHY, MAC, RRC) may report the execution of L1/L2 based inter-cell mobility to the serving RAN node. Alternatively, the serving RAN node may detect the execution of L1/L2 based inter-cell mobility by the UE 3 from a random access of the UE 3 to the selected candidate cell. The DU of the serving RAN node may report the execution of L1/L2 based inter-cell mobility by the UE 3 to the CU. The DU may report this to the CU using an ACCESS SUCCESS message. The Serving RAN Node switches from the current CG set to the candidate CG set corresponding to the candidate SpCell selected by the UE 3 based on the report from the UE 3 or the detection by the Serving RAN Node.

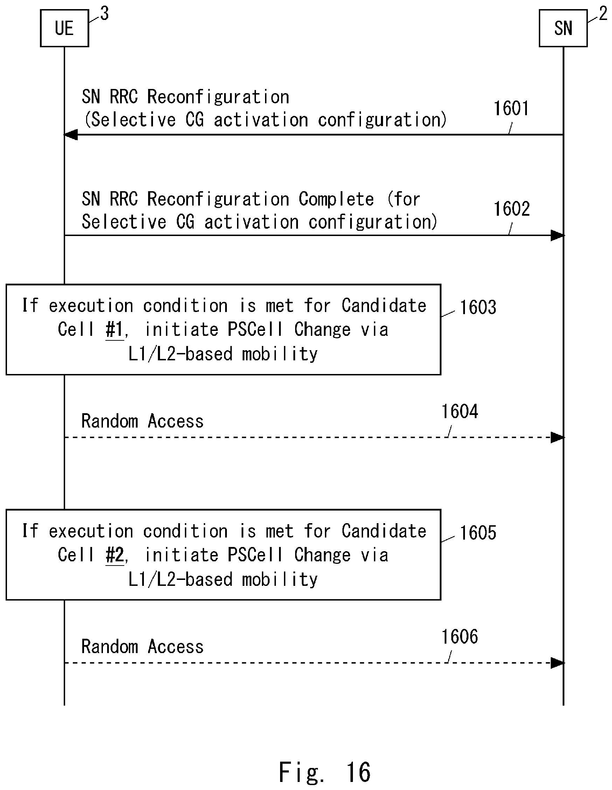

Fig. 16 shows an example of signaling for preparing and executing L1/L2 based inter-cell mobility. In the example in Fig. 16, the serving RAN node is the SN 2, and the UE 3 switches the serving SCG among a plurality of candidate SCG sets provided by the SN 2.

In step 1601, the SN 2 configures multiple candidate SCG sets to the UE 3. Specifically, the SN 2 provides the UE 3 with configurations of the multiple candidate SCG sets and information (e.g., execution/triggering condition) for executing L1/L2 based inter-cell mobility. The SN 2 transmits these configurations to the UE 3 using an SN RRC Reconfiguration message. The SN RRC Reconfiguration message is transmitted to the UE 3 via a direct SRB between the SN 2 and the UE 3, or via the MN 1. In step 1602, the UE 3 responds to the SN 2 with an SN RRC Reconfiguration Complete message.

In step 1603, if the UE 3 determines, based on L1 measurements, that an execution/triggering condition is satisfied for a candidate cell (here, candidate cell #1), it initiates a PSCell change to the selected candidate PSCell (i.e., cell #1). Specifically, the UE 3 detaches from the source PSCell, applies the stored SCG configuration corresponding to the selected candidate PSCell (i.e., the candidate PSCell whose execution condition is satisfied), and synchronizes with that candidate PSCell (i.e., cell #1). In step 1604, the UE 3 may perform a random access to the candidate PSCell (i.e., cell #1).

After the SCG change, the UE 3 continues to evaluate the execution/triggering conditions for the candidate SCG sets. In step 1605, if the UE 3 determines, based on L1 measurements, that an execution/triggering condition is satisfied for another candidate cell (here, candidate cell #2), it initiates a PSCell change to the selected candidate PSCell (i.e., cell #2). In step 1606, the UE 3 may perform a random access to the candidate PSCell (i.e., cell #1).

According to the operations of the UE 3 and the RAN node described in this example embodiment, selective activation of cell groups within a single RAN node (e.g., MN or SN) can be implemented by L1/L2 based inter-cell mobility.

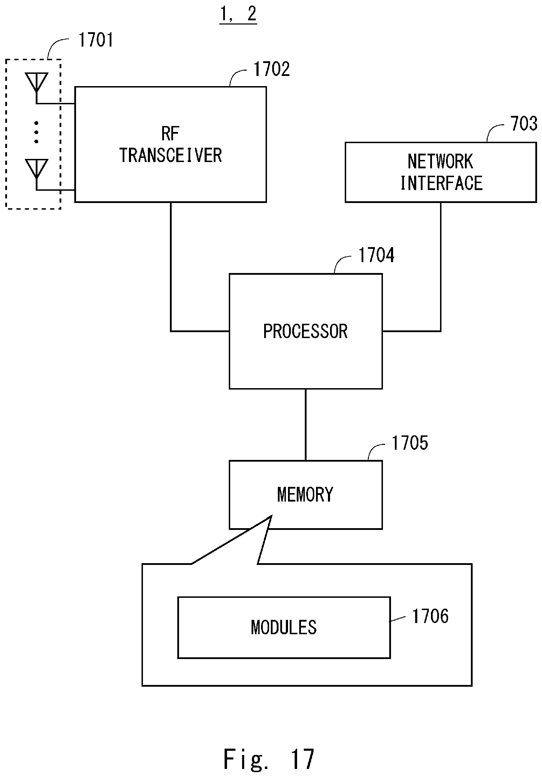

Example configurations of the RAN nodes 1 and 2 and the UE 3 according to the above-described example embodiments are given below. Fig. 17 is a block diagram showing an example configuration of the RAN node 1 according to the example embodiments described above. The configuration of the RAN node 2 may be the same as that shown in Fig. 17. Referring to Fig. 17, the RAN node 1 includes a Radio Frequency transceiver 1701, a network interface 1703, a processor 1704, and a memory 1705. The RF transceiver 1701 performs analog RF signal processing to communicate with UEs including the UE 3. The RF transceiver 1701 may include a plurality of transceivers. The RF transceiver 1701 is coupled to an antenna array 1702 and the processor 1704. The RF transceiver 1701 receives modulation symbol data from the processor 1704, generates a transmission RF signal, and supplies the transmission RF signal to the antenna array 1702. The RF transceiver 1701 generates a baseband reception signal based on a reception RF signal received by the antenna array 1702 and supplies the baseband reception signal to the processor 1704. The RF transceiver 1701 may include an analog beamformer circuit for beamforming. The analog beamformer circuit includes, for example, a plurality of phase shifters and a plurality of power amplifiers.

The network interface 1703 is used to communicate with network nodes (e.g., the RAN nodes 2 and 4, and control and transfer nodes in the core network). The network interface 1703 may include, for example, a Network Interface Card (NIC) that complies with the IEEE 802.3 series.

The processor 1704 performs digital baseband signal processing (data-plane processing) and control-plane processing for radio communication. The processor 1704 may include a plurality of processors. For example, the processor 1704 may include a modem processor (e.g., Digital Signal Processor (DSP)) for performing the digital baseband signal processing and a protocol stack processor (e.g., Central Processing Unit (CPU) or Micro Processing Unit (MPU)) for performing the control-plane processing.

For example, digital baseband signal processing by the processor 1704 may include signal processing in the Service Data Adaptation Protocol (SDAP) layer, the Packet Data Convergence Protocol (PDCP) layer, the Radio Link Control (RLC) layer, the Medium Access Control (MAC) layer, and the Physical (PHY) layer. Control plane processing by the processor 1704 may include processing of Non-Access Stratum (NAS) messages, RRC messages, MAC Control Elements (CE), and Downlink Control Information (DCI).

The processor 1704 may include a digital beamformer module for beamforming. The digital beamformer module may include a Multiple Input Multiple Output (MIMO) encoder and precoder.

The memory 1705 is composed of a combination of a volatile memory and a non-volatile memory. The volatile memory is, for example, a Static Random Access Memory (SRAM), a Dynamic RAM (DRAM), or a combination thereof. The non-volatile memory may be a Mask Read Only Memory (MROM), an Electrically Erasable Programmable ROM (EEPROM), a flash memory, or a hard disk drive, or any combination thereof. The memory 1705 may include a storage located away from the processor 1704. In this case, the processor 1704 may access the memory 1705 via the network interface 1703 or an I/O interface not shown.

The memory 1705 may store one or more software modules (computer programs) 1706 including instructions and data for performing processing by the RAN node 1 described in the above example embodiments. In some implementations, the processor 1704 may be configured to load and execute the software module(s) 1706 from the memory 1705, thereby performing the processing of the RAN node 1 described in the above example embodiments.

When the RAN node 1 is a CU (e.g., eNB-CU or gNB-CU) or a CU-CP, the RAN node 1 does not need to include the RF transceiver 1701 (and the antenna array 1702).

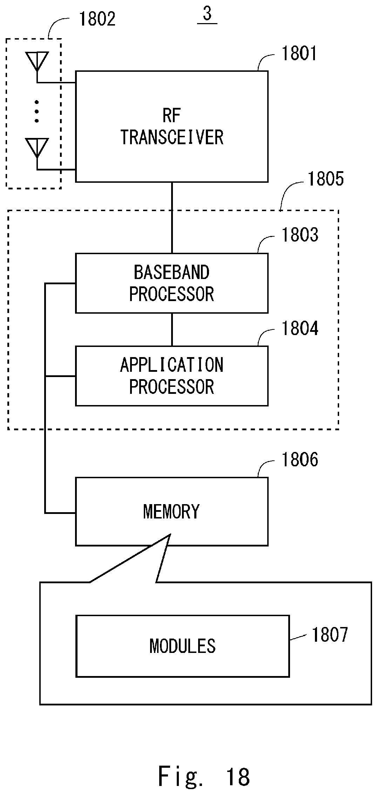

Fig. 18 is a block diagram showing an example configuration of the UE 3. The radio frequency (RF) transceiver 1801 performs analog RF signal processing to communicate with the RAN nodes 1, 2, 4, 6, and 7. The RF transceiver 1801 may include a plurality of transceivers. The analog RF signal processing performed by the RF transceiver 1801 includes frequency up-conversion, frequency downconversion, and amplification. The RF transceiver 1801 is coupled to the antenna array 1802 and the baseband processor 1803. The RF transceiver 1801 receives modulation symbol data (or OFDM symbol data) from the baseband processor 1803, generates a transmission RF signal, and supplies the transmission RF signal to the antenna array 1802. The RF transceiver 1801 generates a baseband reception signal based on the reception RF signal received by the antenna array 1802 and supplies the baseband reception signal to the baseband processor 1803. The RF transceiver 1801 may include an analog beamformer circuit for beamforming. The analog beamformer circuit includes, for example, a plurality of phase shifters and a plurality of power amplifiers.

The baseband processor 1803 performs digital baseband signal processing (data-plane processing) and control-plane processing for wireless communication. The digital baseband signal processing includes (a) data compression/decompression, (b) data segmentation/concatenation, (c) transmission format (transmission frame) composition/decomposition, (d) channel encoding/decoding, (e) modulation (i.e., symbol mapping)/demodulation, and (f) Inverse Fast Fourier Transform (IFFT) generation of OFDM symbol data (baseband OFDM signal). On the other hand, the control-plane processing includes communication management of layer 1 (e.g., transmission power control), layer 2 (e.g., radio resource management, and hybrid automatic repeat request (HARQ) processing), and layer 3 (e.g., signaling regarding attachment, mobility, and call management).

For example, the digital baseband signal processing performed by the baseband processor 1803 may include signal processing in the SDAP layer, PDCP layer, RLC layer, MAC layer, and PHY layer. The control-plane processing performed by the baseband processor 1803 may also include processing of Non-Access Stratum (NAS) protocols, RRC protocols, MAC CEs, and DCIs.

The baseband processor 1803 may perform MIMO encoding and precoding for beamforming.

The baseband processor 1803 may include a modem processor (e.g., DSP) that performs the digital baseband signal processing and a protocol stack processor (e.g., CPU or MPU) that performs the control-plane processing. In this case, the protocol stack processor performing the control-plane processing may be integrated with an application processor 1804 described later.

The application processor 1804 may also be referred to as a CPU, an MPU, a microprocessor, or a processor core. The application processor 1804 may include a plurality of processors (processor cores). The application processor 1804 loads a system software program (Operating System (OS)) and various application programs (e.g., a voice call application, a web browser, a mailer, a camera operation application, a music player application) from a memory 1806 or from another memory (not shown) and executes these programs, thereby providing various functions of the UE 3.

In some implementations, as represented by the dashed line (1805) in Fig. 18, the baseband processor 1803 and the application processor 1804 may be integrated on a single chip. In other words, the baseband processor 1803 and the application processor 1804 may be implemented in a single System on Chip (SoC) device 1805. A SoC device may be referred to as a system Large Scale Integration (LSI) or a chipset.

The memory 1806 is a volatile memory or a non-volatile memory, or a combination thereof. The memory 1806 may include a plurality of physically independent memory devices. The volatile memory is, for example, SRAM, DRAM, or a combination thereof. The non-volatile memory may be MROM, an EEPROM, a flash memory, a hard disk drive, or any combination thereof. The memory 1806 may include, for example, an external memory device that can be accessed by the baseband processor 1803, the application processor 1804, or the SoC 1805. The memory 1806 may include an internal memory device that is integrated into the baseband processor 1803, the application processor 1804, or the SoC 1805. Further, the memory 1806 may include a memory in a Universal Integrated Circuit Card (UICC).

The memory 1806 may store one or more software modules (computer programs) 1807 including instructions and data for processing by the UE 3 described in the above example embodiments. In some implementations, the baseband processor 1803 or the application processor 1804 may load the software module(s) 1807 from the memory 1806 and execute the loaded software module(s) 1807, thereby performing the processing of the UE 3 described in the above example embodiments with reference to the drawings.

The control plane processing and operations performed by the UE 3 described in the above example embodiments may be performed by elements other than the RF transceiver 1801 and the antenna array 1802, i.e., by the memory 1806 storing the software modules 1807 and one or both of the baseband processor 1803 and the application processor 1804.

As described using Figs. 17 and 18, each of the processors in the RAN nodes 1 and 2 and UE 3 according to the above-described example embodiments can execute one or more programs, containing a set of instructions, to cause a computer to perform an algorithm described with reference to the drawings. Each of these programs contains a set of instructions (or software codes) that, when loaded into a computer, causes the computer to perform one or more of the functions described in the example embodiments. Each of these programs may be stored in a non-transitory computer readable medium or a tangible storage medium. By way of example, and not limitation, non-transitory computer readable media or tangible storage media can include a random-access memory (RAM), a read-only memory (ROM), a flash memory, a solid-state drive (SSD) or other memory technologies, CD-ROM, digital versatile disk (DVD), Blu-ray (registered mark) disc or other optical disk storage, magnetic cassettes, magnetic tape, magnetic disk storage or other magnetic storage devices. Each program may be transmitted on a transitory computer readable medium or a communication medium. By way of example, and not limitation, transitory computer readable media or communication media can include electrical, optical, acoustical, or other form of propagated signals.

The example embodiments described above are merely examples of applications of the technical ideas obtained by the inventors. These technical ideas are not limited to the example embodiments described above, and various modifications can be made thereto.

For example, the whole or part of the example embodiments disclosed above can be described as, but not limited to, the following supplementary notes.

### (Supplementary Note 1)

A Radio Access Network (RAN) node configured to operate as a Secondary Node (SN) associated with a Secondary Cell Group (SCG) in dual connectivity for a User Equipment (UE), the RAN node comprising:
at least one memory; and
at least one processor coupled to the at least one memory and configured to:
   transmit to the UE, via a Master Node (MN) or via a direct signaling radio bearer between the SN and the UE, a first SN Radio Resource Control (RRC) message containing configurations of a plurality of candidate Primary Secondary Cell Group (SCG) Cells (PSCells) for a first conditional PSCell change,
wherein the first SN RRC message indicates that a mode of operation is applied, requested, recommended, or available in which a configuration of at least one candidate PSCell not selected in the first conditional PSCell change is to be reused by the UE for a subsequent second conditional PSCell change.

### (Supplementary Note 2)

The RAN node according to Supplementary Note 1, wherein the at least one processor is configured to determine whether the configuration of the at least one candidate PSCell not selected in the first conditional PSCell change is to be maintained by the UE for the subsequent second conditional PSCell change.

### (Supplementary Note 3)

The RAN node according to Supplementary Note 1 or 2, wherein the at least one processor to transmit to the UE, after completion of the first conditional PSCell change, a second SN RRC message containing at least one updated execution condition for the subsequent second conditional mobility with respect to the at least one candidate PSCell.

### (Supplementary Note 4)

The RAN node according to any one of Supplementary Notes 1 to 3, wherein the first SN RRC message indicates to the UE that a source PSCell in the first conditional PSCell change is to be one of candidate PSCells in the subsequent second conditional PSCell change.

### (Supplementary Note 5)

The RAN node according to Supplementary Note 4, wherein the at least one processor is configured to transmit to the UE, after completion of the first conditional PSCell change, a third SN RRC message containing an execution condition for the subsequent second conditional mobility with respect to a new candidate PSCell corresponding to the source PSCell.

### (Supplementary Note 6)

A method performed by a Radio Access Network (RAN) node configured to operate as a Secondary Node (SN) associated with a Secondary Cell Group (SCG) in dual connectivity for a User Equipment (UE), the method comprising:
transmitting to the UE, via a Master Node (MN) or via a direct signaling radio bearer between the SN and the UE, a first SN Radio Resource Control (RRC) message containing configurations of a plurality of candidate Primary Secondary Cell Group (SCG) Cells (PSCells) for a first conditional PSCell change,
wherein the first SN RRC message indicates that a mode of operation is applied, requested, recommended, or available in which a configuration of at least one candidate PSCell not selected in the first conditional PSCell change is to be reused by the UE for a subsequent second conditional PSCell change.

### (Supplementary Note 7)

A non-transitory computer readable medium storing a program for causing a computer to perform a method for a Radio Access Network (RAN) node configured to operate as a Secondary Node (SN) associated with a Secondary Cell Group (SCG) in dual connectivity for a User Equipment (UE), the method comprising:
transmitting to the UE, via a Master Node (MN) or via a direct signaling radio bearer between the SN and the UE, a first SN Radio Resource Control (RRC) message containing configurations of a plurality of candidate Primary Secondary Cell Group (SCG) Cells (PSCells) for a first conditional PSCell change,
wherein the first SN RRC message indicates that a mode of operation is applied, requested, recommended, or available in which a configuration of at least one candidate PSCell not selected in the first conditional PSCell change is to be reused by the UE for a subsequent second conditional PSCell change.

### (Supplementary Note 8)

A User Equipment (UE) comprising:
at least one memory; and
at least one processor coupled to the at least one memory and configured to:
   receive, via a Master Node (MN) or via a direct signaling radio bearer between the UE and a Secondary Node (SN), a first SN Radio Resource Control (RRC) message containing configurations of a plurality of candidate Primary Secondary Cell Group (SCG) Cells (PSCells) for a first conditional PSCell change;
   if an execution condition is satisfied for one of the plurality of candidate PSCells, apply a configuration corresponding to the one candidate PSCell for which the execution condition has been satisfied; and
   if the first SN RRC indicates that a mode of operation is applied, requested, recommended, or available in which a configuration of at least one candidate PSCell not selected in the first conditional PSCell change is to be reused by the UE for a subsequent second conditional PSCell change, maintain the configuration of the at least one candidate PSCell for use in the second conditional PSCell change.

### (Supplementary Note 9)

The UE according to Supplementary Note 8, wherein the at least one processor to receive from the SN, after completion of the first conditional PSCell change, a second SN RRC message containing at least one updated execution condition for the subsequent second conditional PSCell change with respect to the at least one candidate PSCell.

### (Supplementary Note 10)

The UE according to Supplementary Note 8 or 9, wherein the at least one processor is configured to, after completion of the first conditional PSCell change, maintain a configuration of a source PSCell in the first conditional PSCell change to use the source PSCell as one of candidate PSCells in the subsequent second conditional PSCell change.

### (Supplementary Note 11)

The UE according to Supplementary Note 8 or 9, wherein the at least one processor is configured to, if the first SN RRC message indicates that a source PSCell in the first conditional PSCell change is to be one of candidate PSCells in the subsequent second conditional PSCell change, maintain a configuration of the source PSCell for use in the second conditional PSCell change.

### (Supplementary Note 12)

The UE according to Supplementary Note 10 or 11, wherein the at least one processor is configured to receive from the SN, after completion of the first conditional PSCell change, a third SN RRC message containing an execution condition for the subsequent second conditional PSCell change with respect to a new candidate PSCell corresponding to the source PSCell.

### (Supplementary Note 13)

A method performed by a User Equipment (UE), the method comprising:
receiving, via a Master Node (MN) or via a direct signaling radio bearer between the UE and a Secondary Node (SN), a first SN Radio Resource Control (RRC) message containing configurations of a plurality of candidate Primary Secondary Cell Group (SCG) Cells (PSCells) for a first conditional PSCell change;
if an execution condition is satisfied for one of the plurality of candidate PSCells, applying a configuration corresponding to the one candidate PSCell for which the execution condition has been satisfied; and
if the first SN RRC indicates that a mode of operation is applied, requested, recommended, or available in which a configuration of at least one candidate PSCell not selected in the first conditional PSCell change is to be reused by the UE for a subsequent second conditional PSCell change, maintaining the configuration of the at least one candidate PSCell for use in the second conditional PSCell change.

### (Supplementary Note 14)

A non-transitory computer readable medium storing a program for causing a computer to perform a method for a User Equipment (UE), the method comprising:
receiving, via a Master Node (MN) or via a direct signaling radio bearer between the UE and a Secondary Node (SN), a first SN Radio Resource Control (RRC) message containing configurations of a plurality of candidate Primary Secondary Cell Group (SCG) Cells (PSCells) for a first conditional PSCell change;
if an execution condition is satisfied for one of the plurality of candidate PSCells, applying a configuration corresponding to the one candidate PSCell for which the execution condition has been satisfied; and
if the first SN RRC indicates that a mode of operation is applied, requested, recommended, or available in which a configuration of at least one candidate PSCell not selected in the first conditional PSCell change is to be reused by the UE for a subsequent second conditional PSCell change, maintaining the configuration of the at least one candidate PSCell for use in the second conditional PSCell change.

### (Supplementary Note 15)

A Central Unit (CU) of a Radio Access Network (RAN) node, the CU comprising:
at least one memory; and
at least one processor coupled to the at least one memory and configured to:
   send a first message to a Distributed Unit (DU); and
   receive a second message from the DU in response to the first message,
wherein the first message indicates a request for a first conditional mobility for a User Equipment (UE) and indicates that a mode of operation is applied, requested, recommended, or available in which a configuration of at least one candidate target cell not selected in the first conditional mobility is to be reused by the UE for a subsequent second conditional mobility.

### (Supplementary Note 16)

The CU according to Supplementary Note 15, wherein the second message indicates whether or not the DU has determined that the mode of operation is not applicable to one or more candidate target cells prepared by the DU,

### (Supplementary Note 17)

The CU according to Supplementary Note 15, wherein the second message indicates whether or not the DU has prepared the mode of operation for one or more candidate target cells to be prepared by the

### DU.

### (Supplementary Note 18)

The CU according to any one of Supplementary Notes 15 to 17, wherein
the first message is a UE CONTEXT MODIFICATION REQUEST message or a UE CONTEXT SETUP REQUEST message, and
the second message is a UE CONTEXT MODIFICATION RESPONSE message or a UE CONTEXT SETUP RESPONSE message.

### (Supplementary Note 19)

The CU according to any one of Supplementary Notes 15 to 18, wherein
the first conditional mobility is a conditional handover, a conditional Primary Secondary Cell Group (SCG) Cell (PSCell) change, or a conditional PSCell addition, and
the subsequent second conditional mobility is a conditional handover or a conditional PSCell change.

### (Supplementary Note 20)

A method performed by a Central Unit (CU) of a Radio Access Network (RAN) node, the method comprising:
sending a first message to a Distributed Unit (DU); and
receiving a second message from the DU in response to the first message,
wherein the first message indicates a request for a first conditional mobility for a User Equipment (UE) and indicates that a mode of operation is applied, requested, recommended, or available in which a configuration of at least one candidate target cell not selected in the first conditional mobility is to be reused by the UE for a subsequent second conditional mobility.

### (Supplementary Note 21)

A Distributed Unit (DU) of a Radio Access Network (RAN) node, the DU comprising:
at least one memory; and
at least one processor coupled to the at least one memory and configured to:
   receive a first message from a Central Unit (CU); and
   send a second message to the CU in response to the first message,
wherein the first message indicates a request for a first conditional mobility for a User Equipment (UE) and indicates that a mode of operation is applied, requested, recommended, or available in which a configuration of at least one candidate target cell not selected in the first conditional mobility is to be reused by the UE for a subsequent second conditional mobility.

### (Supplementary Note 22)

The DU according to Supplementary Note 21, wherein the second message indicates whether or not the DU has determined that the mode of operation is not applicable to one or more candidate target cells prepared by the DU,

### (Supplementary Note 23)

The DU according to Supplementary Note 21, wherein the second message indicates whether or not the DU has prepared the mode of operation for one or more candidate target cells to be prepared by the DU.

### (Supplementary Note 24)

The DU according to any one of Supplementary Notes 21 to 23, wherein
the first message is a UE CONTEXT MODIFICATION REQUEST message or a UE CONTEXT SETUP REQUEST message, and
the second message is a UE CONTEXT MODIFICATION RESPONSE message or a UE CONTEXT SETUP RESPONSE message.

### (Supplementary Note 25)

The DU according to any one of Supplementary Notes 21 to 24, wherein
the first conditional mobility is a conditional handover, a conditional Primary Secondary Cell Group (SCG) Cell (PSCell) change, or a conditional PSCell addition, and
the subsequent second conditional mobility is a conditional handover or a conditional PSCell change.

### (Supplementary Note 26)

A method performed by a Distributed Unit (DU) of a Radio Access Network (RAN) node, the method comprising:
receiving a first message from a Central Unit (CU); and
sending a second message to the CU in response to the first message,
wherein the first message indicates a request for a first conditional mobility for a User Equipment (UE) and indicates that a mode of operation is applied, requested, recommended, or available in which a configuration of at least one candidate target cell not selected in the first conditional mobility is to be reused by the UE for a subsequent second conditional mobility.

### (Supplementary Note 27)

A Central Unit (CU) of a Radio Access Network (RAN) node, the CU comprising:
at least one memory; and
at least one processor coupled to the at least one memory and configured to:
   receive a first message from a first Distributed Unit (DU), the first message indicating a candidate target cell that a User Equipment (UE) has successfully accessed during a first conditional mobility,
wherein the first message indicates that a preparation of another candidate target cell accepted for the first conditional mobility is to be maintained for a subsequent second conditional mobility.

### (Supplementary Note 28)

The CU according to Supplementary Note 27, wherein the at least one processor is configured to inform a second DU, after receipt of the first message, that preparations of one or more candidate target cells for the first conditional mobility are to be maintained for the subsequent second conditional mobility.

### (Supplementary Note 29)

The CU according to Supplementary Note 27 or 28, wherein the at least one processor is configured to inform a source DU serving a source cell of the first conditional mobility, after receipt of the first message, that a configuration of the source cell is to be maintained for the subsequent second conditional mobility.

### (Supplementary Note 30)

The CU according to any one of Supplementary Notes 27 to 29, wherein the first message is an ACCESS SUCCESS message.

### (Supplementary Note 31)

A method performed by a Central Unit (CU) of a Radio Access Network (RAN) node, the method comprising:
receiving a first message from a first Distributed Unit (DU), the first message indicating a candidate target cell that a User Equipment (UE) has successfully accessed during a first conditional mobility,
wherein the first message indicates that a preparation of another candidate target cell accepted for the first conditional mobility is to be maintained for a subsequent second conditional mobility.

### (Supplementary Note 32)

A Distributed Unit (DU) of a Radio Access Network (RAN) node, the DU comprising:
at least one memory; and
at least one processor coupled to the at least one memory and configured to:
   send a first message to a Central Unit (CU), the first message indicating a candidate target cell that a User Equipment (UE) has successfully accessed during a first conditional mobility,
wherein the first message indicates that a preparation of another candidate target cell accepted for the first conditional mobility is to be maintained for a subsequent second conditional mobility.

### (Supplementary Note 33)

The DU according to Supplementary Note 32, wherein the first message is an ACCESS SUCCESS message.

### (Supplementary Note 34)

A method performed by a Distributed Unit (DU) of a Radio Access Network (RAN) node, the method comprising:
sending a first message to a Central Unit (CU), the first message indicating a candidate target cell that a User Equipment (UE) has successfully accessed during a first conditional mobility,
wherein the first message indicates that a preparation of another candidate target cell accepted for the first conditional mobility is to be maintained for a subsequent second conditional mobility.

### (Supplementary Note 35)

A Central Unit (CU) of a Radio Access Network (RAN) node, the CU comprising:
at least one memory; and
at least one processor coupled to the at least one memory and configured to:
   receive a first message from a first Distributed Unit (DU), the first message indicating a candidate target cell that a User Equipment (UE) has successfully accessed during a first conditional mobility; and
   send to a second DU, after receipt of the first message, a second message indicating that preparations of one or more candidate target cells for the first conditional mobility are to be maintained for a subsequent second conditional mobility.

### (Supplementary Note 36)

The CU according to Supplementary Note 35, wherein the at least one processor is configured to send to a source DU serving a source cell of the first conditional mobility, after receipt of the first message, a third message indicating that a configuration of the source cell is to be maintained for the subsequent second conditional mobility.

### (Supplementary Note 37)

A method performed by a Central Unit (CU) of a Radio Access Network (RAN) node, the method comprising:
receiving a first message from a first Distributed Unit (DU), the first message indicating a candidate target cell that a User Equipment (UE) has successfully accessed during a first conditional mobility; and
sending to a second DU, after receipt of the first message, a second message indicating that preparations of one or more candidate target cells for the first conditional mobility are to be maintained for a subsequent second conditional mobility.

### (Supplementary Note 38)

A Central Unit (CU) of a Radio Access Network (RAN) node, the CU comprising:
at least one memory; and
at least one processor coupled to the at least one memory and configured to:
   receive a first message from a first Distributed Unit (DU), the first message indicating a candidate target cell that a User Equipment (UE) has successfully accessed during a first conditional mobility; and
   send to a source DU serving a source cell of the first conditional mobility, after receipt of the first message, a second message indicating that a configuration of the source cell is to be maintained for a subsequent second conditional mobility.

### (Supplementary Note 39)

A method performed by a Central Unit (CU) of a Radio Access Network (RAN) node, the method comprising:
receiving a first message from a first Distributed Unit (DU), the first message indicating a candidate target cell that a User Equipment (UE) has successfully accessed during a first conditional mobility; and
sending to a source DU serving a source cell of the first conditional mobility, after receipt of the first message, a second message indicating that a configuration of the source cell is to be maintained for a subsequent second conditional mobility.

### (Supplementary Note 40)

A User Equipment (UE) comprising:
at least one memory; and
at least one processor coupled to the at least one memory and configured to:
   receive, from a Radio Access Network (RAN) node, configurations of a plurality of candidate Cell Group (CG) sets in which candidate Special Cells (SpCells) are different from each other; and
   select one candidate SpCell by Layer 1/Layer 2 based inter-cell mobility and apply a configuration of a candidate CG set corresponding to the selected candidate SpCell.

### (Supplementary Note 41)

A method performed by a User Equipment (UE), the method comprising:
receiving, from a Radio Access Network (RAN) node, configurations of a plurality of candidate Cell Group (CG) sets in which candidate Special Cells (SpCells) are different from each other; and
selecting one candidate SpCell by Layer 1/Layer 2 based inter-cell mobility and applying a configuration of a candidate CG set corresponding to the selected candidate SpCell.

This application is based upon and claims the benefit of priority from Japanese Patent Application No. 2021-215151, filed on December 28, 2021, the disclosure of which is incorporated herein in its entirety by reference.

### Reference Signs List

- 1: Master Node (MN)
- 2: Source Secondary Node (S-SN)
- 3: User Equipment (UE)
- 1704: Processor
- 1705: Memory
- 1706: Modules
- 1803: Baseband Processor
- 1804: Application Processor
- 1806: Memory
- 1807: Modules

## Claims

1. A Radio Access Network (RAN) node configured to operate as a Secondary Node (SN) associated with a Secondary Cell Group (SCG) in dual connectivity for a User Equipment (UE), the RAN node comprising:
at least one memory; and
at least one processor coupled to the at least one memory and configured to:
transmit to the UE, via a Master Node (MN) or via a direct signaling radio bearer between the SN and the UE, a first SN Radio Resource Control (RRC) message containing configurations of a plurality of candidate Primary Secondary Cell Group (SCG) Cells (PSCells) for a first conditional PSCell change,
wherein the first SN RRC message indicates that a mode of operation is applied, requested, recommended, or available in which a configuration of at least one candidate PSCell not selected in the first conditional PSCell change is to be reused by the UE for a subsequent second conditional PSCell change.

2. The RAN node according to claim 1, wherein the at least one processor is configured to determine whether the configuration of the at least one candidate PSCell not selected in the first conditional PSCell change is to be maintained by the UE for the subsequent second conditional PSCell change.

3. The RAN node according to claim 1 or 2, wherein the at least one processor to transmit to the UE, after completion of the first conditional PSCell change, a second SN RRC message containing at least one updated execution condition for the subsequent second conditional mobility with respect to the at least one candidate PSCell.

4. The RAN node according to any one of claims 1 to 3, wherein the first SN RRC message indicates to the UE that a source PSCell in the first conditional PSCell change is to be one of candidate PSCells in the subsequent second conditional PSCell change.

5. The RAN node according to claim 4, wherein the at least one processor is configured to transmit to the UE, after completion of the first conditional PSCell change, a third SN RRC message containing an execution condition for the subsequent second conditional mobility with respect to a new candidate PSCell corresponding to the source PSCell.

6. A method performed by a Radio Access Network (RAN) node configured to operate as a Secondary Node (SN) associated with a Secondary Cell Group (SCG) in dual connectivity for a User Equipment (UE), the method comprising:
transmitting to the UE, via a Master Node (MN) or via a direct signaling radio bearer between the SN and the UE, a first SN Radio Resource Control (RRC) message containing configurations of a plurality of candidate Primary Secondary Cell Group (SCG) Cells (PSCells) for a first conditional PSCell change,
wherein the first SN RRC message indicates that a mode of operation is applied, requested, recommended, or available in which a configuration of at least one candidate PSCell not selected in the first conditional PSCell change is to be reused by the UE for a subsequent second conditional PSCell change.

7. A non-transitory computer readable medium storing a program for causing a computer to perform a method for a Radio Access Network (RAN) node configured to operate as a Secondary Node (SN) associated with a Secondary Cell Group (SCG) in dual connectivity for a User Equipment (UE), the method comprising:
transmitting to the UE, via a Master Node (MN) or via a direct signaling radio bearer between the SN and the UE, a first SN Radio Resource Control (RRC) message containing configurations of a plurality of candidate Primary Secondary Cell Group (SCG) Cells (PSCells) for a first conditional PSCell change,
wherein the first SN RRC message indicates that a mode of operation is applied, requested, recommended, or available in which a configuration of at least one candidate PSCell not selected in the first conditional PSCell change is to be reused by the UE for a subsequent second conditional PSCell change.

8. A User Equipment (UE) comprising:
at least one memory; and
at least one processor coupled to the at least one memory and configured to:
receive, via a Master Node (MN) or via a direct signaling radio bearer between the UE and a Secondary Node (SN), a first SN Radio Resource Control (RRC) message containing configurations of a plurality of candidate Primary Secondary Cell Group (SCG) Cells (PSCells) for a first conditional PSCell change;
if an execution condition is satisfied for one of the plurality of candidate PSCells, apply a configuration corresponding to the one candidate PSCell for which the execution condition has been satisfied; and
if the first SN RRC indicates that a mode of operation is applied, requested, recommended, or available in which a configuration of at least one candidate PSCell not selected in the first conditional PSCell change is to be reused by the UE for a subsequent second conditional PSCell change, maintain the configuration of the at least one candidate PSCell for use in the second conditional PSCell change.

9. The UE according to claim 8, wherein the at least one processor to receive from the SN, after completion of the first conditional PSCell change, a second SN RRC message containing at least one updated execution condition for the subsequent second conditional PSCell change with respect to the at least one candidate PSCell.

10. The UE according to claim 8 or 9, wherein the at least one processor is configured to, after completion of the first conditional PSCell change, maintain a configuration of a source PSCell in the first conditional PSCell change to use the source PSCell as one of candidate PSCells in the subsequent second conditional PSCell change.

11. The UE according to claim 8 or 9, wherein the at least one processor is configured to, if the first SN RRC message indicates that a source PSCell in the first conditional PSCell change is to be one of candidate PSCells in the subsequent second conditional PSCell change, maintain a configuration of the source PSCell for use in the second conditional PSCell change.

12. The UE according to claim 10 or 11, wherein the at least one processor is configured to receive from the SN, after completion of the first conditional PSCell change, a third SN RRC message containing an execution condition for the subsequent second conditional PSCell change with respect to a new candidate PSCell corresponding to the source PSCell.

13. A method performed by a User Equipment (UE), the method comprising:
receiving, via a Master Node (MN) or via a direct signaling radio bearer between the UE and a Secondary Node (SN), a first SN Radio Resource Control (RRC) message containing configurations of a plurality of candidate Primary Secondary Cell Group (SCG) Cells (PSCells) for a first conditional PSCell change;
if an execution condition is satisfied for one of the plurality of candidate PSCells, applying a configuration corresponding to the one candidate PSCell for which the execution condition has been satisfied; and
if the first SN RRC indicates that a mode of operation is applied, requested, recommended, or available in which a configuration of at least one candidate PSCell not selected in the first conditional PSCell change is to be reused by the UE for a subsequent second conditional PSCell change, maintaining the configuration of the at least one candidate PSCell for use in the second conditional PSCell change.

14. A non-transitory computer readable medium storing a program for causing a computer to perform a method for a User Equipment (UE), the method comprising:
receiving, via a Master Node (MN) or via a direct signaling radio bearer between the UE and a Secondary Node (SN), a first SN Radio Resource Control (RRC) message containing configurations of a plurality of candidate Primary Secondary Cell Group (SCG) Cells (PSCells) for a first conditional PSCell change;
if an execution condition is satisfied for one of the plurality of candidate PSCells, applying a configuration corresponding to the one candidate PSCell for which the execution condition has been satisfied; and
if the first SN RRC indicates that a mode of operation is applied, requested, recommended, or available in which a configuration of at least one candidate PSCell not selected in the first conditional PSCell change is to be reused by the UE for a subsequent second conditional PSCell change, maintaining the configuration of the at least one candidate PSCell for use in the second conditional PSCell change.

15. A Central Unit (CU) of a Radio Access Network (RAN) node, the CU comprising:
at least one memory; and
at least one processor coupled to the at least one memory and configured to:
send a first message to a Distributed Unit (DU); and
receive a second message from the DU in response to the first message,
wherein the first message indicates a request for a first conditional mobility for a User Equipment (UE) and indicates that a mode of operation is applied, requested, recommended, or available in which a configuration of at least one candidate target cell not selected in the first conditional mobility is to be reused by the UE for a subsequent second conditional mobility.

16. The CU according to claim 15, wherein the second message indicates whether or not the DU has determined that the mode of operation is not applicable to one or more candidate target cells prepared by the DU,

17. The CU according to claim 15, wherein the second message indicates whether or not the DU has prepared the mode of operation for one or more candidate target cells to be prepared by the DU.

18. The CU according to any one of claims 15 to 17, wherein
the first message is a UE CONTEXT MODIFICATION REQUEST message or a UE CONTEXT SETUP REQUEST message, and
the second message is a UE CONTEXT MODIFICATION RESPONSE message or a UE CONTEXT SETUP RESPONSE message.

19. The CU according to any one of claims 15 to 18, wherein
the first conditional mobility is a conditional handover, a conditional Primary Secondary Cell Group (SCG) Cell (PSCell) change, or a conditional PSCell addition, and
the subsequent second conditional mobility is a conditional handover or a conditional PSCell change.

20. A method performed by a Central Unit (CU) of a Radio Access Network (RAN) node, the method comprising:
sending a first message to a Distributed Unit (DU); and
receiving a second message from the DU in response to the first message,
wherein the first message indicates a request for a first conditional mobility for a User Equipment (UE) and indicates that a mode of operation is applied, requested, recommended, or available in which a configuration of at least one candidate target cell not selected in the first conditional mobility is to be reused by the UE for a subsequent second conditional mobility.

21. A Distributed Unit (DU) of a Radio Access Network (RAN) node, the DU comprising:
at least one memory; and
at least one processor coupled to the at least one memory and configured to:
receive a first message from a Central Unit (CU); and
send a second message to the CU in response to the first message,
wherein the first message indicates a request for a first conditional mobility for a User Equipment (UE) and indicates that a mode of operation is applied, requested, recommended, or available in which a configuration of at least one candidate target cell not selected in the first conditional mobility is to be reused by the UE for a subsequent second conditional mobility.

22. The DU according to claim 21, wherein the second message indicates whether or not the DU has determined that the mode of operation is not applicable to one or more candidate target cells prepared by the DU,

23. The DU according to claim 21, wherein the second message indicates whether or not the DU has prepared the mode of operation for one or more candidate target cells to be prepared by the DU.

24. The DU according to any one of claims 21 to 23, wherein
the first message is a UE CONTEXT MODIFICATION REQUEST message or a UE CONTEXT SETUP REQUEST message, and
the second message is a UE CONTEXT MODIFICATION RESPONSE message or a UE CONTEXT SETUP RESPONSE message.

25. The DU according to any one of claims 21 to 24, wherein
the first conditional mobility is a conditional handover, a conditional Primary Secondary Cell Group (SCG) Cell (PSCell) change, or a conditional PSCell addition, and
the subsequent second conditional mobility is a conditional handover or a conditional PSCell change.

26. A method performed by a Distributed Unit (DU) of a Radio Access Network (RAN) node, the method comprising:
receiving a first message from a Central Unit (CU); and
sending a second message to the CU in response to the first message,
wherein the first message indicates a request for a first conditional mobility for a User Equipment (UE) and indicates that a mode of operation is applied, requested, recommended, or available in which a configuration of at least one candidate target cell not selected in the first conditional mobility is to be reused by the UE for a subsequent second conditional mobility.

27. A Central Unit (CU) of a Radio Access Network (RAN) node, the CU comprising:
at least one memory; and
at least one processor coupled to the at least one memory and configured to:
receive a first message from a first Distributed Unit (DU), the first message indicating a candidate target cell that a User Equipment (UE) has successfully accessed during a first conditional mobility,
wherein the first message indicates that a preparation of another candidate target cell accepted for the first conditional mobility is to be maintained for a subsequent second conditional mobility.

28. The CU according to claim 27, wherein the at least one processor is configured to inform a second DU, after receipt of the first message, that preparations of one or more candidate target cells for the first conditional mobility are to be maintained for the subsequent second conditional mobility.

29. The CU according to claim 27 or 28, wherein the at least one processor is configured to inform a source DU serving a source cell of the first conditional mobility, after receipt of the first message, that a configuration of the source cell is to be maintained for the subsequent second conditional mobility.

30. The CU according to any one of claims 27 to 29, wherein the first message is an ACCESS SUCCESS message.

31. A method performed by a Central Unit (CU) of a Radio Access Network (RAN) node, the method comprising:
receiving a first message from a first Distributed Unit (DU), the first message indicating a candidate target cell that a User Equipment (UE) has successfully accessed during a first conditional mobility,
wherein the first message indicates that a preparation of another candidate target cell accepted for the first conditional mobility is to be maintained for a subsequent second conditional mobility.

32. A Distributed Unit (DU) of a Radio Access Network (RAN) node, the DU comprising:
at least one memory; and
at least one processor coupled to the at least one memory and configured to:
send a first message to a Central Unit (CU), the first message indicating a candidate target cell that a User Equipment (UE) has successfully accessed during a first conditional mobility,
wherein the first message indicates that a preparation of another candidate target cell accepted for the first conditional mobility is to be maintained for a subsequent second conditional mobility.

33. The DU according to claim 32, wherein the first message is an ACCESS SUCCESS message.

34. A method performed by a Distributed Unit (DU) of a Radio Access Network (RAN) node, the method comprising:
sending a first message to a Central Unit (CU), the first message indicating a candidate target cell that a User Equipment (UE) has successfully accessed during a first conditional mobility,
wherein the first message indicates that a preparation of another candidate target cell accepted for the first conditional mobility is to be maintained for a subsequent second conditional mobility.

35. A Central Unit (CU) of a Radio Access Network (RAN) node, the CU comprising:
at least one memory; and
at least one processor coupled to the at least one memory and configured to:
receive a first message from a first Distributed Unit (DU), the first message indicating a candidate target cell that a User Equipment (UE) has successfully accessed during a first conditional mobility; and
send to a second DU, after receipt of the first message, a second message indicating that preparations of one or more candidate target cells for the first conditional mobility are to be maintained for a subsequent second conditional mobility.

36. The CU according to claim 35, wherein the at least one processor is configured to send to a source DU serving a source cell of the first conditional mobility, after receipt of the first message, a third message indicating that a configuration of the source cell is to be maintained for the subsequent second conditional mobility.

37. A method performed by a Central Unit (CU) of a Radio Access Network (RAN) node, the method comprising:
receiving a first message from a first Distributed Unit (DU), the first message indicating a candidate target cell that a User Equipment (UE) has successfully accessed during a first conditional mobility; and
sending to a second DU, after receipt of the first message, a second message indicating that preparations of one or more candidate target cells for the first conditional mobility are to be maintained for a subsequent second conditional mobility.

38. A Central Unit (CU) of a Radio Access Network (RAN) node, the CU comprising:
at least one memory; and
at least one processor coupled to the at least one memory and configured to:
receive a first message from a first Distributed Unit (DU), the first message indicating a candidate target cell that a User Equipment (UE) has successfully accessed during a first conditional mobility; and
send to a source DU serving a source cell of the first conditional mobility, after receipt of the first message, a second message indicating that a configuration of the source cell is to be maintained for a subsequent second conditional mobility.

39. A method performed by a Central Unit (CU) of a Radio Access Network (RAN) node, the method comprising:
receiving a first message from a first Distributed Unit (DU), the first message indicating a candidate target cell that a User Equipment (UE) has successfully accessed during a first conditional mobility; and
sending to a source DU serving a source cell of the first conditional mobility, after receipt of the first message, a second message indicating that a configuration of the source cell is to be maintained for a subsequent second conditional mobility.

40. A User Equipment (UE) comprising:
at least one memory; and
at least one processor coupled to the at least one memory and configured to:
receive, from a Radio Access Network (RAN) node, configurations of a plurality of candidate Cell Group (CG) sets in which candidate Special Cells (SpCells) are different from each other; and
select one candidate SpCell by Layer 1/Layer 2 based inter-cell mobility and apply a configuration of a candidate CG set corresponding to the selected candidate SpCell.

41. A method performed by a User Equipment (UE), the method comprising:
receiving, from a Radio Access Network (RAN) node, configurations of a plurality of candidate Cell Group (CG) sets in which candidate Special Cells (SpCells) are different from each other; and
selecting one candidate SpCell by Layer 1/Layer 2 based inter-cell mobility and applying a configuration of a candidate CG set corresponding to the selected candidate SpCell.
